# EUROPEAN PATENT APPLICATION

(11) **EP 4 250 809 A1**
(43) Date of publication of application: **27.09.2023**
(21) Application number: 21894072.4
(22) Date of filing: 22.11.2021
(51) Int. Cl.: H04W 28/00

(54) **TRANSMISSION METHOD, NOTIFICATION METHOD, TRANSMISSION UNIT, AND NETWORK-SIDE DEVICE**

(30) Priority: 20.11.2020 CN 202011312357
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: XU, Xiaodong, Beijing 100032 (CN)
(74) Representative: GPI Brevets
(86) International application number: PCT/CN2021/132206
(87) International publication number: WO 2022/105925

(57) **Abstract**

A transmission method, a notification method, a transmission unit and a network side device are provided. The transmission method is applied to a transmission unit, which supports to provide, together with one or more other transmission units, uplink aggregation transmission or uplink joint transmission for PDCP SDUs in a same cell or a same network device. The transmission unit supports a same network standard as the other transmission units. The transmission method includes: in the case of the joint transmission, uniformly numbering PDCP SDUs received from an upper layer through a PDCP numbering function and/or a PDCP sorting function; or in the case of the aggregation transmission, processing the PDCP SDUs received from the upper layer through a PDCP sub-layer and an RLC sub-layer shared with the other transmission units as well as respective MAC sub-layers and respective physical sub-layers of the transmission unit and the other transmission units.

## Description

### CROSS-REFERENCE TO RELATED APPLICATION

This application claims the priority of the Chinese patent application No.202011312357.5 filed in China on November 20, 2020, which is incorporated herein by reference in its entirety.

### TECHNICAL FIELD

The present disclosure relates to the field of communication technology, in particular to a transmission method, a notification method, a transmission unit and a network side device.

### BACKGROUND

Along with the development of the communication technology, uplink transmission is increasingly demanded. For example, in the field of monitoring, a monitor terminal needs to upload monitoring data at a large data volume. However, in the related art, maximum transmission power of the terminal is limited, e.g., 23dBm or 26dBm. Due to a form and a size of a conventional terminal, it is difficult to break through the maximum transmission power of the terminal, so an uplink coverage and an uplink throughput of the terminal are limited, and thereby the transmission performance is poor in an application scenario where a large volume of data needs to be uploaded by the terminal.

### SUMMARY

An object of the present disclosure is to provide a transmission method, a notification method, a transmission unit and a network side device, so as to improve the transmission performance of the transmission unit through aggregation transmission or joint transmission of a plurality of transmission units.

In order to achieve the above-mentioned purposes, the present disclosure provides the following technical solutions.

In a first aspect, the present disclosure provides in some embodiments a transmission method performed by a transmission unit, the transmission unit being used for providing, together with other transmission units having different Identities (IDs), uplink aggregation transmission or uplink joint transmission for Packet Data Convergence Protocol (PDCP) Service Data units (SDUs) in a same cell or a same network device, the transmission unit supporting a same network standard as the other transmission units, the network standard including a 5^{th}-Generation (5G) New Radio (NR), the transmission method including: in the case of the joint transmission, uniformly numbering PDCP SDUs received from an upper layer through a PDCP numbering function and/or a PDCP sorting function; or in the case of the aggregation transmission, processing the PDCP SDUs received from the upper layer through a PDCP sub-layer and a Radio Link Control (RLC) sub-layer that are used to be shared with the other transmission units as well as respective Medium Access Control (MAC) sub-layers and respective physical sub-layers of the transmission unit and the other transmission units.

In a second aspect, the present disclosure provides in some embodiments a transmission method for a network side device, including performing joint sorting processing on PDCP PDUs transmitted by different transmission units in a same cell through uplink aggregation transmission or uplink joint transmission.

In a third aspect, the present disclosure provides in some embodiments a transmission method for a network side device, the network side device being used to provide, in a same cell, downlink aggregation transmission or downlink joint transmission for PDCP SDUs to at least two transmission units, the transmission method including: in the case of the joint transmission, uniformly numbering the PDCP SDUs received from an upper layer, and jointly transmitting, through at least two bearers in a same cell, the PDCP SDUs to at least two transmission units configured for performing the joint transmission; or in the case of the aggregation transmission, processing the PDCP SDUs received from the upper layer through a PDCP sub-layer and an RLC sub-layer shared by the at least two transmission units and an MAC sub-layer and a physical sub-layer for each of the at least two transmission units.

In a fourth aspect, the present disclosure provides in some embodiments a transmission method performed by a transmission unit, including: in the case of the joint transmission, receiving PDCP SDUs transmitted by a network side device to different transmission units and uniformly numbered by the network side device, and performing re-sorting and/or merging on the PDCP SDUs; or in the case of the aggregation transmission, processing the PDCP SDUs through a physical sub-layer and an MAC sub-layer of the transmission unit as well as an RLC sub-layer and a PDCP sub-layer shared with the other transmission units.

In a fifth aspect, the present disclosure provides in some embodiments a transmission method performed by a transmission unit, the transmission unit being used to provide downlink aggregation transmission or downlink joint transmission for PDCP SDUs in a same cell or a same network device together with one or more other transmission units, the transmission method including: receiving PDCP SDUs transmitted by a network side device, Sequence Numbers (SNs) of the PDCP SDUs transmitted to the transmission units for downlink aggregation transmission or downlink joint transmission being determined uniformly by the network side device; and transmitting the PDCP SDUs to the other transmission units having different IDs.

In a sixth aspect, the present disclosure provides in some embodiments a notification method performed by a transmission unit, the transmission unit supporting to provide, together with one or more other transmission units, aggregation transmission or joint transmission in a same cell or a same network device, the transmission unit and the other transmission units supporting a same network standard, the notification method including: transmitting first indication information to a network side device, the first indication information being used to indicate that the transmission units at least support the aggregation transmission in a same cell or a same network device or the joint transmission in a same cell; or receiving second indication information transmitted by the network side device, the second indication information being used to indicate the aggregation transmission or the joint transmission for the transmission units in a same cell.

In a seventh aspect, the present disclosure provides in some embodiments a notification method for a network side device, the network side device supporting to provide aggregation transmission or joint transmission through at least two transmission units supporting a same network standard in a same cell, the notification method including: receiving first indication information from each transmission unit, the first indication information being used to indicate that the transmission units at least support the aggregation transmission in a same cell or a same network device or the joint transmission in a same cell; or transmitting second indication information to the transmission units, the second indication information being used to indicate the aggregation transmission or the joint transmission for the transmission units in a same cell.

In an eighth aspect, the present disclosure provides in some embodiments a transmission method for joint bearers of a plurality of User Equipments (UEs) in a cell for a LTE. Radio protocols for the plurality of UEs and supporting the joint bearers are located in a same cell, each radio protocol supports to transmit PDCP SDUs received from an upper layer through a bearer of the UE and a bearer of at least one slave UE in a same cell, and for a Data Radio Bearer (DRB) jointly carried by the plurality of UEs, SNs of uplink PDCP SDUs for the slave UE which accesses to a same cell as the UE are assigned by the UE.

In a ninth aspect, the present disclosure provides in some embodiments a transmission method for a network side device, including performing joint sorting on PDCP SDUs transmitted by a master UE and a slave UE to a same cell through joint transmission or aggregation transmission via bearers of the master UE and the slave UE, the master UE being configured to perform, together with the slave UE, the joint transmission or aggregation transmission.

In a tenth aspect, the present disclosure provides in some embodiments a transmission method for a network side device, including: uniformly numbering PDCP SDUs received from an upper layer; and transmitting the PDCP SDUs to a master UE and a slave UE in a same cell through respective bearers of the master UE and the slave UE, the master UE being configured to perform, together with the slave LTE, joint transmission or aggregation transmission.

In an eleventh aspect, the present disclosure provides in some embodiments a transmission method for a master UE, including: receiving PDCP SDUs transmitted by a network side device and a slave UE and uniformly numbered by the network side device, the master UE being configured to perform, together with the slave LTE, joint transmission or aggregation transmission; and performing re-sorting and/or merging on the PDCP SDUs.

In a twelfth aspect, the present disclosure provides in some embodiments a notification method for a LTE. Radio protocols for a plurality of UEs and supporting joint bearers are located in a same cell, each radio protocol supports to transmit PDCP SDUs received from an upper layer through a bearer of the UE and a bearer of at least one slave UE in a same cell, and for a DRB jointly carried by the plurality of UEs, SNs of uplink PDCP SDUs for the slave UE which accesses to a same cell as the UE are assigned by the UE. The notification method includes: transmitting first indication information to a network side device, the first indication information being used to indicate a master-slave relation between the UEs; or receiving second indication information transmitted by the network side device, the second indication information being used to indicate the master-slave relation between the UEs.

In a thirteenth aspect, the present disclosure provides in some embodiments a notification method for a network side device, the network side device supporting to provide aggregation transmission or joint transmission through at least two transmission units supporting a same network standard in a same cell, the notification method including: receiving first indication information from a master UE, the first indication information being used to indicate a master-slave relation between LTEs; or transmitting second indication information to the master LTE, the second indication information being used to indicate the master-slave relation between the UEs.

In a fourteenth aspect, the present disclosure provides in some embodiments a transmission unit, the transmission unit supporting to provide, together with one or more other transmission units, uplink aggregation transmission or uplink joint transmission for PDCP SDUs in a same cell or a same network device, and the transmission unit supporting a same network standard as the other transmission units. The transmission unit includes a processor and a transceiver. The processor is configured to: in the case of the joint transmission, uniformly number PDCP SDUs received from an upper layer through a PDCP numbering function and/or a PDCP sorting function; or in the case of the aggregation transmission, process the PDCP SDUs received from the upper layer through a PDCP sub-layer and an RLC sub-layer shared with the other transmission units as well as respective MAC sub-layers and respective physical sub-layers of the transmission unit and the other transmission units.

In a fifteenth aspect, the present disclosure provides in some embodiments a network side device, including a processor and a transceiver. The processor is configured to perform joint sorting processing on PDCP PDUs transmitted by different transmission units in a same cell through uplink aggregation transmission or uplink joint transmission.

In a sixteenth aspect, the present disclosure provides in some embodiments a network side device, the network side device being used to provide, in a same cell, downlink aggregation transmission or downlink joint transmission for PDCP SDUs to at least two transmission units, the network side device including a processor and a transceiver. The processor is configured to, in the case of the joint transmission, uniformly number the PDCP SDUs received from an upper layer, and the transceiver is used for a first transmission module configured to transmit the PDCP SDUs to at least two transmission units for joint transmission through at least two bearers in a same cell; or the processor is configured to, in the case of the aggregation transmission, process the PDCP SDUs received from the upper layer through a PDCP sub-layer and an RLC sub-layer shared by the at least two transmission units and an MAC sub-layer and a physical sub-layer for each of the at least two transmission units.

In a seventeenth aspect, the present disclosure provides in some embodiments a transmission unit, including a processor and a transceiver. The transceiver is configured to receive PDCP SDUs transmitted by a network side device to different transmission units and uniformly numbered by the network side device, and the processor is configured to perform re-sorting and/or merging on the PDCP SDUs; or the processor is configured to process the PDCP SDUs through a physical sub-layer and an MAC sub-layer of the transmission unit as well as an RLC sub-layer and a PDCP sub-layer shared with the other transmission units.

In an eighteenth aspect, the present disclosure provides in some embodiments a transmission unit, the transmission unit being used to provide downlink aggregation transmission or downlink joint transmission for PDCP SDUs in a same cell or a same network device together with one or more other transmission units, the transmission unit including a processor and a transceiver. The transceiver is configured to receive PDCP SDUs from a network side device, SNs of the PDCP SDUs transmitted to the transmission units for downlink aggregation transmission or downlink joint transmission are determined uniformly by the network side device, and the transceiver is further configured to transmit the PDCP SDUs to the other transmission units having different IDs.

In a nineteenth aspect, the present disclosure provides in some embodiments a transmission unit, the transmission unit being used to provide, together with one or more other transmission units, aggregation transmission or joint transmission in a same cell or a same network device, the transmission unit and the other transmission units supporting a same network standard, the transmission unit including a processor and a transceiver. The transceiver is configured to transmit first indication information to a network side device, and the first indication information is used to indicate that the transmission units at least support the aggregation transmission in a same cell or a same network device or the joint transmission in a same cell; or the transceiver is configured to receive second indication information transmitted by the network side device, and the second indication information is used to indicate the aggregation transmission or the joint transmission for the transmission units in a same cell.

In a twentieth aspect, the present disclosure provides in some embodiments a network side device, the network side device supporting to provide aggregation transmission or joint transmission through at least two transmission units supporting a same network standard in a same cell, the network side device including a processor and a transceiver. The transceiver is configured to receive first indication information from each transmission unit, and the first indication information is used to indicate that the transmission units at least support the aggregation transmission in a same cell or a same network device or the joint transmission in a same cell; or the transceiver is configured to transmit second indication information to each transmission unit, and the second indication information is used to indicate the aggregation transmission or the joint transmission for the transmission units in a same cell.

In a twenty-first aspect, the present disclosure provides in some embodiments a LTE. Radio protocols for a plurality of LTEs and supporting joint bearers are located in a same cell, each radio protocol supports to transmit PDCP SDUs received from an upper layer through a bearer of the UE and a bearer of at least one slave LTE in a same cell, and for a DRB jointly carried by the plurality of LTEs, SNs of uplink PDCP SDUs for the slave UE which accesses to a same cell as the UE are assigned by the UE.

In a twenty-second aspect, the present disclosure provides in some embodiments a network side device, including a processor and a transceiver. The processor is configured to perform joint sorting on PDCP SDUs transmitted by a master LTE and a slave LTE to a same cell through joint transmission or aggregation transmission via bearers of the master UE and the slave UE, and the master UE is configured to perform, together with the slave LTE, the joint transmission or aggregation transmission.

In a twenty-third aspect, the present disclosure provides in some embodiments a network side device, including a processor and a transceiver. The processor is configured to uniformly number PDCP SDUs received from an upper layer, the transceiver is configured to transmit the PDCP SDUs to a master UE and a slave UE in a same cell through respective bearers of the master UE and the slave UE, and the master LTE is configured to perform, together with the slave LTE, joint transmission or aggregation transmission.

In a twenty-fourth aspect, the present disclosure provides in some embodiments a master UE, including a processor and a transceiver. The transceiver is configured to receive PDCP SDUs transmitted by a network side device and a slave UE and uniformly numbered by the network side device, the master UE is configured to perform, together with the slave LTE, joint transmission or aggregation transmission, and the processor is configured to perform re-sorting and/or merging on the PDCP SDUs.

In a twenty-fifth aspect, the present disclosure provides in some embodiments a LTE. Radio protocols for a plurality of LTEs and supporting joint bearers are located in a same cell, each radio protocol supports to transmit PDCP SDUs received from an upper layer through a bearer of the UE and a bearer of at least one slave LTE in a same cell, and for a DRB jointly carried by the plurality of LTEs, SNs of uplink PDCP SDUs for the slave UE which accesses to a same cell as the UE are assigned by the UE. The UE includes a processor and a transceiver. The transceiver is configured to: transmit first indication information to a network side device, the first indication information being used to indicate a master-slave relation between the LTEs; or receive second indication information transmitted by the network side device, the second indication information being used to indicate the master-slave relation between the UEs.

In a twenty-sixth aspect, the present disclosure provides in some embodiments a network side device, the network side device supporting to provide aggregation transmission or joint transmission through at least two transmission units supporting a same network standard in a same cell, the network side device includes a processor and a transceiver. The transceiver is configured to: receive first indication information from a master UE, the first indication information being used to indicate a master-slave relation between UEs; or transmit second indication information to the master UE, the second indication information being used to indicate the master-slave relation between the UEs.

In a twenty-seventh aspect, the present disclosure provides in some embodiments a transmission unit, the transmission unit supporting to provide uplink aggregation transmission or uplink joint transmission for PDCP SDUs in a same cell or a same network device together with other transmission units, the transmission unit supporting a same network standard as the other transmission units, the transmission unit including: in the case of the joint transmission, a first numbering module configured to uniformly number PDCP SDUs received from an upper layer through a PDCP numbering function and/or a PDCP sorting function; or in the case of the aggregation transmission, a first processing module configured to process the PDCP SDUs received from the upper layer through a PDCP sub-layer and an RLC sub-layer shared with the other transmission units as well as respective MAC sub-layers and respective physical sub-layers of the transmission unit and the other transmission units.

In a twenty-eighth aspect, the present disclosure provides in some embodiments a network side device, including a first sorting module configured to perform joint sorting processing on PDCP PDUs transmitted by different transmission units in a same cell through uplink aggregation transmission or uplink joint transmission.

In a twenty-ninth aspect, the present disclosure provides in some embodiments a network side device, the network side device being used to provide, in a same cell, downlink aggregation transmission or downlink joint transmission for PDCP SDUs to at least two transmission units, the network side device including: in the case of the joint transmission, a second numbering module configured to uniformly number the PDCP SDUs received from an upper layer, and transmit the PDCP SDUs to at least two transmission units for joint transmission through at least two bearers in a same cell; or in the case of the joint transmission, a second processing module configured to process the PDCP SDUs received from the upper layer through a PDCP sub-layer and an RLC sub-layer shared by the at least two transmission units as well as an MAC sub-layer and a physical sub-layer for each of the at least two transmission units.

In a thirtieth aspect, the present disclosure provides in some embodiments a transmission unit, including: in the case of the joint transmission, a first reception module configured to receive PDCP SDUs transmitted by a network side device to different transmission units and uniformly numbered by the network side device, and perform re-sorting and/or merging on the PDCP SDUs; or in the case of the aggregation transmission, a third processing module configured to process the PDCP SDUs through a physical sub-layer and an MAC sub-layer of the transmission unit as well as an RLC sub-layer and a PDCP sub-layer shared with the other transmission units.

In a thirty-first aspect, the present disclosure provides in some embodiments a transmission unit, including: a second reception module configured to receive PDCP SDUs from a network side device, SNs of the PDCP SDUs being determined uniformly by the network side device; and a second transmission module configured to transmit the PDCP SDUs to other transmission units having different IDs.

In a thirty-second aspect, the present disclosure provides in some embodiments a transmission unit, the transmission unit supporting to provide, together with one or more other transmission units, aggregation transmission or joint transmission in a same cell or a same network device, the transmission unit and the other transmission units supporting a same network standard, the transmission unit including: a third transmission module configured to transmit first indication information to a network side device, the first indication information being used to indicate that the transmission units at least support the aggregation transmission in a same cell or a same network device or the joint transmission in a same cell; or a third reception module configured to receive second indication information transmitted by the network side device, the second indication information being used to indicate the aggregation transmission or the joint transmission for the transmission units in a same cell.

In a thirty-third aspect, the present disclosure provides in some embodiments a network side device, the network side device supporting to provide aggregation transmission or joint transmission through at least two transmission units supporting a same network standard in a same cell, the network side device including: a fourth reception module configured to receive first indication information from each transmission unit, the first indication information being used to indicate that the transmission units at least support the aggregation transmission in a same cell or a same network device or the joint transmission in a same cell; or a fourth transmission module configured to transmit second indication information to each transmission unit, the second indication information being used to indicate the aggregation transmission or the joint transmission for the transmission units in a same cell.

In a thirty-fourth aspect, the present disclosure provides in some embodiments a network side device, including a third sorting module configured to perform joint sorting on PDCP SDUs transmitted by a master LTE and a slave UE to a same cell through joint transmission or aggregation transmission via bearers of the master UE and the slave UE, the master UE being configured to perform, together with the slave LTE, the joint transmission or aggregation transmission.

In a thirty-fifth aspect, the present disclosure provides in some embodiments a network side device, including: a second numbering module configured to uniformly number PDCP SDUs received from an upper layer; and a third transmission module configured to transmit the PDCP SDUs to a master UE and a slave UE in a same cell through respective bearers of the master UE and the slave LTE, the master LTE being configured to perform, together with the slave LTE, joint transmission or aggregation transmission.

In a thirty-sixth aspect, the present disclosure provides in some embodiments a master UE, including: a fifth reception module configured to receive PDCP SDUs transmitted by a network side device and a slave LTE and uniformly numbered by the network side device, the master LTE being configured to perform, together with the slave LTE, joint transmission or aggregation transmission; and a fourth sorting module configured to perform re-sorting and/or merging on the PDCP SDUs.

In a thirty-seventh aspect, the present disclosure provides in some embodiments a LTE. Radio protocols for a plurality of LTEs and supporting joint bearers are located in a same cell, each radio protocol supports to transmit PDCP SDUs received from an upper layer through a bearer of the UE and a bearer of at least one slave LTE in a same cell, and for a DRB jointly carried by the plurality of LTEs, SNs of uplink PDCP SDUs for the slave UE which accesses to a same cell as the UE are assigned by the LTE. The LTE includes: a sixth transmission module configured to transmit first indication information to a network side device, the first indication information being used to indicate a master-slave relation between the LTEs; or a sixth reception module configured to receive second indication information transmitted by the network side device, the second indication information being used to indicate the master-slave relation between the UEs.

In a thirty-eighth aspect, the present disclosure provides in some embodiments a network side device, the network side device supporting to provide aggregation transmission or joint transmission through at least two transmission units supporting a same network standard in a same cell, the network side device including: a seventh reception module configured to receive first indication information from a master UE, the first indication information being used to indicate a master-slave relation between LTEs; or a seventh transmission module configured to transmit second indication information to the master LTE, the second indication information being used to indicate the master-slave relation between the UEs.

In a thirty-ninth aspect, the present disclosure provides in some embodiments a transmission unit, including a processor, a memory, and a computer program stored in the memory and executed by the processor. The processor is configured to execute the computer program, to implement the steps of the method in the first aspect, the fourth aspect, the fifth aspect or the sixth aspect.

In a fortieth aspect, the present disclosure provides in some embodiments a UE, including a processor, a memory, and a computer program stored in the memory and executed by the processor. The processor is configured to execute the computer program, so as to implement the steps of the method in the eighth aspect, the eleventh aspect or the twelfth aspect.

In a forty-first aspect, the present disclosure provides in some embodiments a network side device, including a processor, a memory, and a computer program stored in the memory and executed by the processor. The processor is configured to execute the computer program, to implement the steps of the method in the second aspect, the third aspect, the seventh aspect, the ninth aspect, the tenth aspect or the thirteenth aspect.

In a forty-second aspect, the present disclosure provides in some embodiments a computer-readable storage medium storing therein a computer program. The computer program is used to be executed by a processor to implement the steps of the method in the first aspect, the second aspect, the third aspect, the fourth aspect, the fifth aspect, the sixth aspect, the seventh aspect, the eighth aspect, the ninth aspect, the tenth aspect, the eleventh aspect, the twelfth aspect or the thirteenth aspect.

According to the embodiments of the present disclosure, the transmission unit provides the uplink aggregation transmission or uplink joint transmission for the PDCP SDUs together with the other transmission units having different IDs in a same cell or a same network device, and the transmission unit supports a same network standard as the other transmission units. The PDCP SDUs received from the upper layer are uniformly numbered through the PDCP numbering function and/or the PDCP sorting function, or the PDCP SDUs received from the upper layer are processed through the PDCP sub-layer and the RLC sub-layer shared by the transmission units as well as the MAC sub-layer and the physical sub-layer of the transmission unit, so that the uplink aggregation transmission or uplink joint transmission for the PDCP SDUs are performed through the plurality of transmission units. As compared with the aggregation transmission mode in the prior art, it is able to increase maximum uplink transmission power of the transmission unit through the power of the plurality of transmission units, and meanwhile prevent the PDCP SDUs from being erroneously shunted among the transmission units through uniformly numbering the PDCP SDUs at the PDCP sub-layer, thereby to improve the transmission performance of the transmission unit. In the embodiments of the present disclosure, in a scenario where two UEs or transmission units in a transmission device access to a same cell, through the above-mentioned coordinated transmission mechanism, it is able for the two LTEs or transmission units which were irrelevant to each other to perform the coordinated transmission, thereby to improve the data transmission performance.

### BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
Fig. 1a is a flow chart of a first transmission method according to an embodiment of the present disclosure;
Fig. 1b is another flow chart of the first transmission method according to an embodiment of the present disclosure;
Fig. 2a is a schematic view showing an applicable network system according to an embodiment of the present disclosure;
Fig. 2b is another schematic view showing the applicable network system according to an embodiment of the present disclosure;
Fig. 2c is yet another schematic view showing the applicable network system according to an embodiment of the present disclosure;
Fig. 3 is a flow chart of a second transmission method according to an embodiment of the present disclosure;
Fig. 4a is a flow chart of a third transmission method according to an embodiment of the present disclosure;
Fig. 4b is another flow chart of the third transmission method according to an embodiment of the present disclosure;
Fig. 5a is a flow chart of a fourth transmission method according to an embodiment of the present disclosure;
Fig. 5b is another flow chart of the fourth transmission method according to an embodiment of the present disclosure;
Fig. 6 is a flow chart of a fifth transmission method according to an embodiment of the present disclosure;
Fig. 7 is a flow chart of a transmission method for joint bearers of a plurality of UEs in a cell according to an embodiment of the present disclosure;
Fig. 8 is a flow chart of a sixth transmission method according to an embodiment of the present disclosure;
Fig. 9 is a flow chart of a seventh transmission method according to an embodiment of the present disclosure;
Fig. 10 is a flow chart of an eighth transmission method according to an embodiment of the present disclosure;
Fig. 11a is a schematic view showing a first transmission unit according to an embodiment of the present disclosure;
Fig. 11b is another schematic view showing the first transmission unit according to an embodiment of the present disclosure;
Fig. 12 is a schematic view showing a first network side device according to an embodiment of the present disclosure;
Fig. 13a is a schematic view showing a second network side device according to an embodiment of the present disclosure;
Fig. 13b is another schematic view showing the second network side device according to an embodiment of the present disclosure;
Fig. 14a is a schematic view showing a second transmission unit according to an embodiment of the present disclosure;
Fig. 14b is another schematic view showing the second transmission unit according to an embodiment of the present disclosure;
Fig. 15 is a schematic view showing a third transmission unit according to an embodiment of the present disclosure;
Fig. 16 is a schematic view showing another transmission unit according to an embodiment of the present disclosure;
Fig. 17 is a schematic view showing another network side device according to an embodiment of the present disclosure;
Fig. 18a is a schematic view showing the interaction of the transmission method in a UE-aggregated scenario according to an embodiment of the present disclosure; and
Fig. 18b is a schematic view showing the transmission method in the LTE-aggregated scenario with a PDCP sub-layer as a common layer according to an embodiment of the present disclosure.

### DETAILED DESCRIPTION

The present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

In the related art, maximum transmission power of a UE may be increased through uplink aggregation transmission or uplink joint transmission. In the uplink aggregation transmission or uplink joint transmission, a service flow needs to be transmitted from two UEs in a shunting manner. In order to prevent the occurrence of a shunting error (e.g., prevent the service flow from being out-of-order or transmitted repeatedly), through service customization, Internet Protocol (IP) addresses of two UEs are mapped to each other through an application layer, and then a data flow for the two UEs is controlled at the application layer in accordance with the IP addresses.

When the IP addresses of the two UEs are not mapped to each other at the application layer, there is no coordination between the UEs, and application layer data is transmitted by each UE individually. At this time, it is impossible for the application layer to select the UE to perform the transmission. Hence, the IP addresses of the two UEs must be mapped to each other at the application layer.

In addition, there exist the following defects in the above scheme.

As a first defect, this scheme is merely applicable to a customized service, so an application range is small.

As a second defect, in the process of controlling the data flow through the application layer, the service continuity may be poor, a delay jitter may be relatively large, and unnecessary retransmission may occur. For example, there are 20 data packets at the application layer, the odd-numbered data packets are assigned for UE A, and the even-numbered data packets are assigned for UE B. At this time, at a network side, there is no priori information indicating that UE A and UE B need to be scheduled simultaneously as possible to reduce the delay, so a scheduling interval of the two UEs may probably be large. In this regard, the transmission continuity of the service data is reduced, and the delay of the entire service data is increased.

Based on the above, in the related art, a process of mapping the IP addresses of the two UEs to each other is complicated, the application range is small, and a packet loss easily occurs.

An object of the present disclosure is to provide a transmission method, so as to provide aggregation transmission or joint transmission for PDCP SDUs through a plurality of transmission units (typically the UEs as described above) in a same cell or a same network device, thereby to solve the problem caused when transmission power of an individual transmission unit is limited. In the embodiments of the present disclosure, the PDCP SDUs to be distributed among different transmission units are uniformly numbered in advance through a PDCP numbering function and/or a PDCP sorting function, so as to facilitate the reception and management of the PDCP SDUs at a network side. As compared with a situation where the PDCP SDUs are transmitted by an individual transmission unit, in the transmission method in the embodiments of the present disclosure, through the aggregation transmission or the joint transmission of the PDCP SDUs, it is able to make full use of the transmission power of each transmission unit, thereby to prevent the problem caused when the power of an individual transmission unit is limited. In addition, it is unnecessary to customize each service, so the application range is large.

For an existing UE which supports NR Dual Connectivity (DC) and Evolved Universal Terrestrial Radio Access Network (EUTRAN)-NR (EN) DC, even if the UE supports to access two base stations or two different cells (the two cells belong to different systems, e.g., in EN DC, one cell is a Long Term Evolution (LTE) cell and the other is an NR cell; or the two cells belong to a same system, e.g., in NR-NR DC, the two cells are both NR cells), uplink transmission power of the UE in the two cells is assigned statically or dynamically, but it is still difficult for its total power to be greater than 23dBm or 26dBm. It means that, even if the UE operates in the two cells simultaneously, it is difficult to remarkably increase the uplink transmission performance. However, when a transmission device includes two UE-type transmission units (the capability of each transmission unit is reported individually), maximum transmission power of each transmission unit is 26dBm, and they are presented as two UEs coordinating with each other or as one UE (capability of the two transmission units is reported jointly), it is able to remarkably improve the uplink transmission performance even if the transmission device merely operates in an individual cell, because each of the transmission units supports the maximum transmission power. In EN DC or NR-NR DC, a single LTE accesses to at least two different cells or base stations simultaneously, and the at least two cells or base stations coordinate with each other to receive data from, and transmit data to, the single LTE. Different from EN DC or NR DC, in this scheme, two related UEs or transmission units in one transmission device access to a same cell, and the two LTEs or transmission units which were irrelevant to each other coordinate with each other through a coordinated transmission mechanism, so as to improve the data transmission performance.

In addition, PDCP SDUs received from an upper layer are uniformly numbered through a PDCP numbering function and/or a PDCP sorting function, so in the aggregation transmission or the joint transmission through the plurality of transmission units, it is able to detect a packet loss in time, thereby to retransmit the data in the case of packet loss.

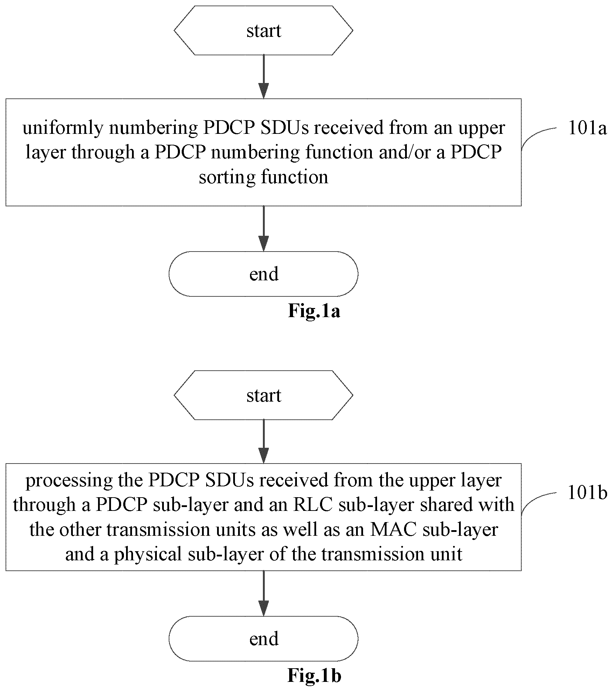

As shown in Figs. 1a and 1b, the present disclosure provides in some embodiments a transmission method performed by a transmission unit. The transmission unit supports to provide uplink aggregation transmission or uplink joint transmission for PDCP SDUs in a same cell or a same network device together with other transmission units, and the transmission unit supports a same network standard as the other transmission units.

As shown in Figs. 1a and 1b, the transmission method includes: Step 101a of, in the case of the joint transmission, uniformly numbering PDCP SDUs received from an upper layer through a PDCP numbering function and/or a PDCP sorting function; or Step 101b of, in the case of the aggregation transmission, processing the PDCP SDUs received from the upper layer through a PDCP sub-layer and an RLC sub-layer shared with the other transmission units as well as respective MAC sub-layers and respective physical sub-layers of the transmission unit and the other transmission units.

The transmission unit may be a UE or any other transmission unit, which will not be further particularly defined herein. However, for ease of understanding, the following description will be given by taking the UE as an example.

In the embodiments of the present disclosure, the transmission units have different IDs so as to indicate different transmission unit devices. Further, when the transmission unit supports a same network standard as the other transmission units having different IDs, it means that the transmission units provide the uplink aggregation transmission or uplink joint transmission for the PDCP SDUs to a same cell through a same network standard.

Based on the above, a scenario where the transmission method is applied includes the following features: there is a combination of a plurality of physical transmitting ends/receiving ends (e.g., the other transmission units having different permanent IDs, e.g., International Mobile Equipment Identity (IMEI) or International Mobile Subscriber Identity (IMSI), or transmission units having different temporary IDs, e.g., Radio Network Temporary Identity (RNTI), and operating in a same network standard) and one receiving end/transmitting end (corresponding to a same cell), and the plurality of transmission units performs the transmission through a same network standard, different from existing single-UE carrier aggregation transmission and Dual Connection (DC) transmission.

In the embodiments of the present disclosure, in an uplink direction, data from a same application or data source is uniformly numbered by the plurality of transmission units, physically independent of each other, at the PDCP sub-layer through a newly-added sub-layer (also called as entity) shared by the transmission units, or the PDCP numbering function and/or PDCP sorting function integrated in the PDCP sub-layer, or the PDCP sub-layer and the RLC sub-layer shared by the transmission units. In this way, it is able to prevent the PDCP SDUs from being shunted erroneously among the transmission units and from being received erroneously at a network side, thereby to improve the transmission performance.

In addition, in the embodiments of the present disclosure, the data from a same application or data source is transmitted through the plurality of transmission units physically independent of each other. Different from the single-UE DC transmission and carrier aggregation transmission, the transmission is performed using the power of the plurality of transmission units, so it is able to break through the limitation of the power of a single LTE. Moreover, the LTEs or transmission units which were irrelevant coordinate with each other for the transmission, so it is able to improve the data transmission performance.

In the embodiments of the present disclosure, the plurality of transmission units transmits the data to a same network side device in a same cell using a same network standard. As compared with an existing DC transmission mode, it is able to reduce the requirement of the LTE on the network standard (it is unnecessary to provide a multi-mode LTE supporting various network standards), and enable the UEs or transmission units which were irrelevant to coordinate with each other for the transmission, thereby to improve the transmission reliability as well as the data transmission performance through different transmission units. In addition, the data is transmitted to a same network side device, so as compared with the existing DC transmission mode, it is unnecessary to collect the data to a same network side, thereby to reduce the data processing complexity at the network side.

During the implementation, there may exist an association relationship among the plurality of transmission units for the uplink aggregation transmission or uplink joint transmission, and this association relationship may be obtained by the network side, so that the network side uniformly plans and processes the data for the associated transmission units in the cases that the uplink aggregation transmission or uplink joint transmission is performed among the transmission units in a same cell. Data exchange is performed among the associated transmission units via Sidelink or the like, which will not be particularly defined herein.

During the implementation, the association relationship is obtained by the network side as follows. In a first mode, the association relationship is preset in the network side device. In a second mode, in the process of registering one transmission unit, the other to-be-associated transmission units are also registered through agent. For example, when a transmission unit is registered each time, identification information about the to-be-associated transmission units is provided, so as to indicate the association relationship. Alternatively, the transmission unit is bound in advance to the to-be-associated transmission units at the network side. In a third mode, each transmission unit is registered independently, and then the association relationship is notified to the network side, i.e., the association relationship is determined with respect to each transmission unit.

In addition, for the PDCP numbering function, the PDCP SDUs to be uplink transmitted through different transmission units are uniformly numbered, and then the uniformly numbered PDCP SDUs are uploaded through different transmission units, so that SNs of the PDCP SDUs uploaded by different transmission units are different from each other.

For example, the SNs of the uniformly numbered PDCP SDUs includes 1, 2, 3 and 4, and an independent entity transmits the PDCP SDUs with SNs of 1, 2 and 3 to LTE A, and transmits the PDCP SDUs with an SN of 4 to LTE B.

In this way, it is able to prevent the same PDCP SDU from being repeatedly transmitted by different transmission units. In an application scenario with good communication quality and low packet loss, it is able to improve the transmission efficiency of the PDCP SDUs and save resources. It should be noted that, during the implementation, after the PDCP SDUs are uniformly numbered, the PDCP SDUs with a same SN may also be transmitted through different transmission units.

For example, the SNs of the uniformly numbered PDCP SDUs are 1, 2, 3 and 4, and the independent entity transmits the PDCP SDUs with the SNs of 1, 2, 3 and 4 to UE A and UE B, so that the PDCP SDUs received by UE A and UE B have same SNs.

In this way, it is able to transmit the same PDCP SDU repeatedly by different transmission units. In an application scenario with poor communication quality and high packet loss, it is able to reduce the packet loss for the PDCP SDUs, thereby to improve the transmission reliability of the PDCP SDUs.

For the PDCP sorting function, the PDCP SDUs are received by the plurality of transmission units and uniformly re-stored, so as to prevent the PDCP SDUs from being out-of-order during the uplink joint transmission.

To be specific, the uniformly numbering the PDCP SDUs received from the upper layer includes uniformly numbering, by the plurality of transmission units, the PDCP SDUs through a common protocol data unit entity or a common PDCP sub-layer.

In a possible embodiment of the present disclosure, the PDCP numbering function and/or the PDCP sorting function are arranged in an independent entity, and the independent entity is shared by all the transmission units.

It should be appreciated that, the independent entity is described from the point of view of a protocol stack, and it is arranged at different layers on the protocol stack from the other entities (e.g., a PDCP entity), rather than physical entity devices being different from each other.

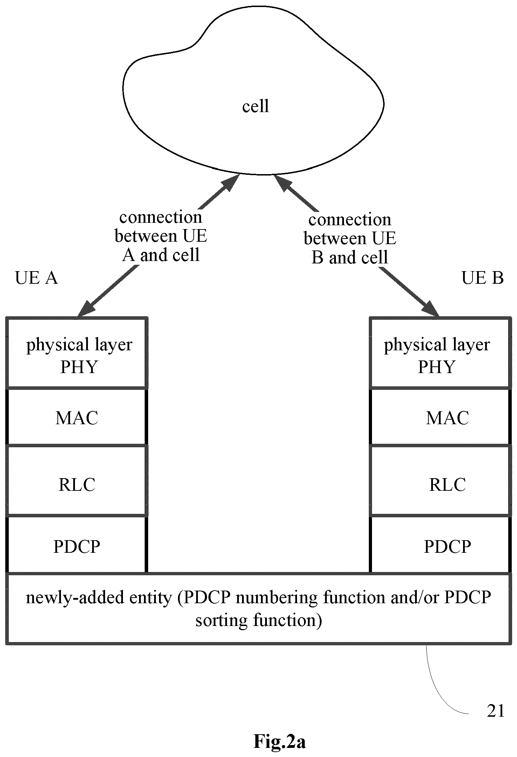

For example, as shown in Fig. 2a, LTE A and LTE B are two UEs associated with each other, and they together provide uplink joint transmission for the PDCP SDUs to a same next-generation Node B (gNB). At this time, a PDCP entity 21 is shared by UE A and the UE B.

The transmission method further includes, in the case that the PDCP numbering function and/or the PDCP sorting function are arranged in the independent entity, transmitting the numbered PDCP SDUs through the independent entity to a PDCP entity of a corresponding transmission unit for processing. For example, the PDCP SDUs are transmitted to respective transmission units or all of the transmission units, which will be described hereinafter.

In the embodiments of the present disclosure, one independent entity is shared by the associated transmission units, and each transmission unit obtains the uniformly-numbered PDCP SDUs from the independent entity, so that the PDCP SDUs obtained by the transmission units have different SNs. In other words, the numbered PDCP SDUs are uploaded through different transmission units, so that the SNs of the PDCP SDUs uploaded through different transmission units are different from each other. In this way, it is able to prevent the PDCP SDUs having the same SN from being repeatedly transmitted by a plurality of transmission units, thereby to improve the transmission efficiency.

It should be noted that, in actual use, in the case that the PDCP numbering function and/or the PDCP sorting function are arranged in the independent entity, the numbered PDCP SDUs are transmitted through the independent entity to each associated transmission unit, i.e., the PDCP SDUs with same SNs are uploaded through respective different transmission units. In this way, it is able to further prevent the occurrence of packet loss.

In another possible embodiment of the present disclosure, the PDCP numbering function and/or the PDCP sorting function are integrated in the PDCP entity.

The PDCP entity is a PDCP entity of any or a part of transmission units in the associated transmission units.

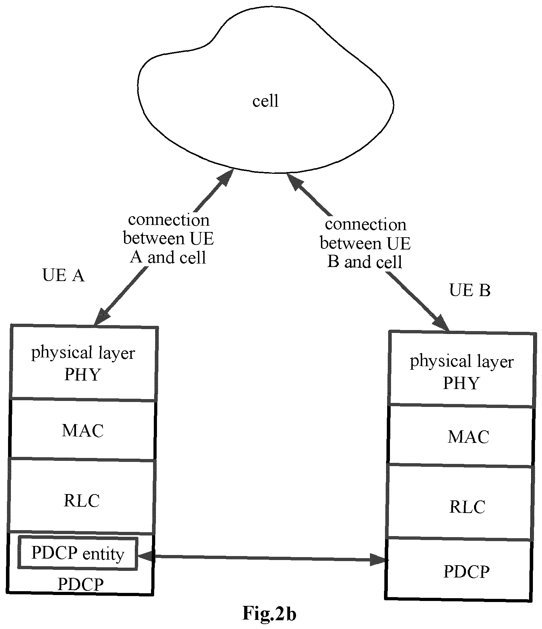

For example, as shown in Fig. 2b, in the uplink joint transmission where UE A and UE B together provide the PDCP SDUs to the gNB, the PDCP numbering function and/or PDCP sorting function may be executed by a PDCP entity in a PDCP layer for UE A.

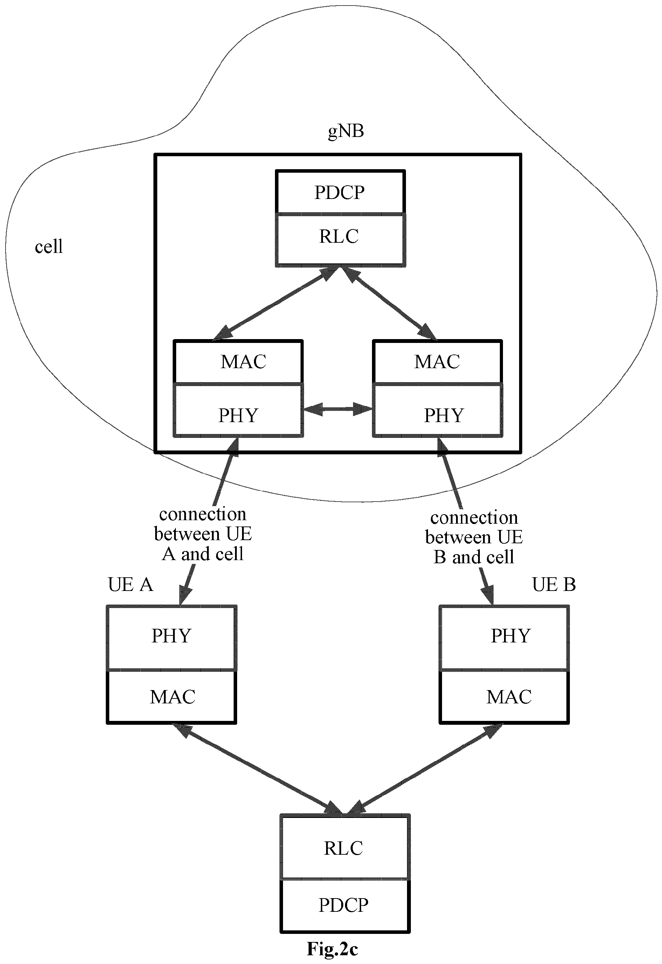

For example, as shown in Fig. 2c, in the uplink aggregation transmission where UE A and UE B together provide the PDCP SDUs to the gNB, the PDCP SDUs received from the upper layer are processed through the PDCP sub-layer and the RLC sub-layer shared with the other transmission units as well as the MAC sub-layer and the physical sub-layer of each of LTE A and LTE B.

In addition, the transmission method further includes, in the case that the PDCP numbering function and/or the PDCP sorting function are integrated in the PDCP entity, transmitting the numbered PDCP SDUs through the PDCP entity to a PDCP entity of the other transmission unit for processing, or processing the PDCP SDUs through the PDCP entity integrated with the PDCP numbering function and/or the PDCP sorting function.

In the embodiments of the present disclosure, an existing PDCP entity of one transmission unit is shared by the associated transmission units, and the uniformly numbered PDCP SDUs are obtained by the associated transmission units from the PDCP entity, so that the SNs of the PDCP SDUs obtained by the associated transmission units are different from each other. In this way, it is able to prevent the PDCP SDUs with same SNs from being repeatedly transmitted by the associated transmission units.

It should be noted that, in actual use, in the case that the PDCP numbering function and/or the PDCP sorting function are arranged in the PDCP entity, the numbered PDCP SDUs may be transmitted to each associated transmission unit through the PDCP entity, which will not be further particularly defined herein.

During the implementation, before performing the aggregation transmission or the joint transmission, the network side and the associated transmission units need to obtain a state for performing the aggregation transmission or the joint transmission as follows.

In a possible embodiment of the present disclosure, the transmission method further includes: transmitting first indication information to the network side device, the first indication information being used to indicate that the transmission units at least support the aggregation transmission in a same cell or a same network device or the joint transmission in a same cell; or receiving second indication information transmitted by the network side device, the second indication information being used to indicate the aggregation transmission or the joint transmission for the transmission units in a same cell.

In the case that the first indication information is transmitted by the transmission unit to the network side device, the information indicated by the first indication information includes capability information about the transmission unit indicating that the transmission unit supports to provide the joint transmission for the PDCP SDUs together with the other UEs in a same cell.

It should be noted that, the first indication information may also indicates the other transmission units which provide, together with the transmission unit, the joint transmission for the PDCP SDUs in a same cell.

The transmission unit (e.g., a master UE) selects the other transmission units (e.g., slave UEs) having different IDs, so as to provide the uplink aggregation transmission or uplink joint transmission for the PDCP SDUs in a same cell.

In addition, in the case that the second indication information is received by the transmission unit from the network side device, the network side device may select the plurality of transmission units (i.e., the associated UEs) which provide the uplink aggregation transmission or uplink joint transmission for the PDCP SUDs in a same cell, so that a service flow for one transmission unit is mapped onto bearers of the associated transmission units and the network side. Upon the receipt of the second indication information, each transmission unit performs the uplink aggregation transmission or uplink joint transmission.

According to the embodiments of the present disclosure, the transmission unit provides the uplink aggregation transmission or uplink joint transmission for the PDCP SDUs together with the other transmission units having different IDs in a same cell or a same network device, and the transmission unit supports a same network standard as the other transmission units. The PDCP SDUs received from the upper layer are uniformly numbered through the PDCP numbering function and/or the PDCP sorting function, and then the uplink aggregation transmission or uplink joint transmission for the uniformly numbered PDCP SDUs are performed through the plurality of transmission units. As a result, it is able to increase maximum uplink transmission power of the transmission unit, and meanwhile prevent the PDCP SDUs from being erroneously shunted among the transmission units through uniformly numbering the PDCP SDUs, thereby to improve the transmission performance of the transmission unit.

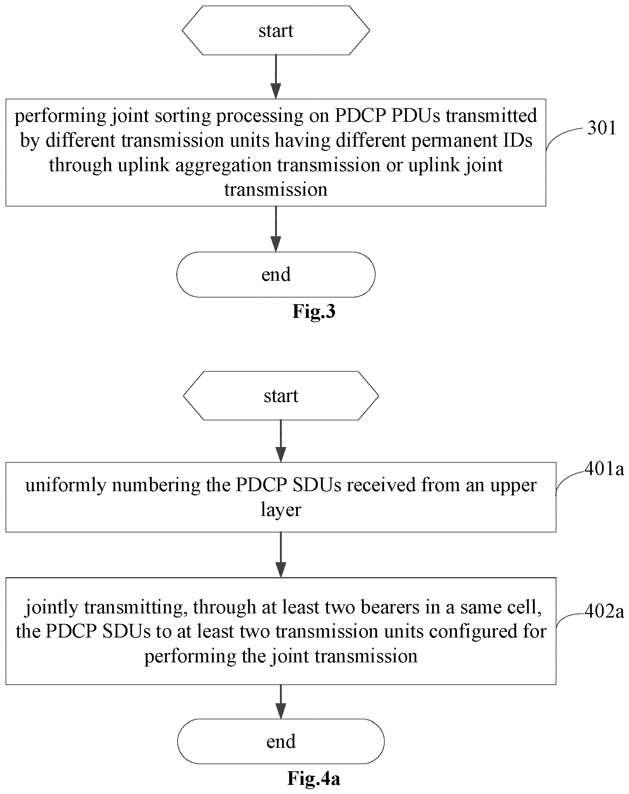

As shown in Fig. 3, the present disclosure further provides in some embodiments a transmission method for a network side device, which includes Step 301 of performing joint sorting processing on PDCP PDUs transmitted by different transmission units in a same cell through uplink aggregation transmission or uplink joint transmission.

In the embodiments of the present disclosure, for the transmission unit, the joint transmission and the aggregation transmission are different from each other in terms of protocol processing, but for the network side device, the joint transmission and the aggregation transmission are the same.

In the embodiments of the present disclosure, the different transmission units are transmission units having different IDs, i.e., different transmission unit devices.

Based on the above, a scenario where the transmission method is applied includes the following feature: there is a combination of a plurality of physical transmitting ends/receiving ends (e.g., the other transmission units having different permanent IDs, e.g., independent IMEI or IMSI, or transmission units having different temporary IDs, e.g., RNTI, and operating in a same network standard) and one receiving end/transmitting end (corresponding to a same cell), different from existing single-LTE carrier aggregation transmission and DC transmission.

During the implementation, the network side device receives the uniformly numbered PDCP PDUs received respectively from the plurality of transmission units. At this time, for the joint sorting processing, the PDCP PDUs received from the plurality of transmission units are re-stored in accordance with a uniformly numbering order, so as to ignore the PDCP PDUs repeatedly transmitted by the plurality of transmission units.

For example, UE A and UE B together provide the aggregation transmission or the joint transmission for the PDCP PDUs to the gNB, and the PDCP PDUs transmitted by UE A and UE B respectively are uniformly numbered. At this time, when the gNB receives PDCP PDUs with SNs of 1, 2 and 4 from LTE A and receives a PDCP PDUs with an SN of 3 from LTE B, the gNB performs the joint sorting processing on the PDCP PDUs in accordance with a numbering order of 1, 2, 3 and 4.

It should be appreciated that, the uplink aggregation transmission or uplink joint transmission has a same meaning as that mentioned in the transmission method in Figs. 1a and 1b, and like the PDCP SDUs received from the upper layer, the PDCP PDUs may be uniformly numbered through the PDCP numbering function and/or PDCP sorting function, which will not be repeatedly defined herein.

The transmission method in the embodiments of the present disclosure is applied to a scenario where a plurality of transmission units provides the uplink aggregation transmission or uplink joint transmission for the PDCP SDUs to the network side device. The joint sorting processing is performed on PDCP PDUs received from the plurality of transmission units at the network side, so as to accurately identify each PDCP PDU and respond to the PDCP PDU.

In a possible embodiment of the present disclosure, the transmission method further includes: receiving first indication information from each transmission unit, the first indication information being used to indicate that the transmission units at least support the aggregation transmission in a same cell or a same network device or the joint transmission in a same cell; or transmitting second indication information to the transmission units, the second indication information being used to indicate the aggregation transmission or the joint transmission for the transmission units in a same cell.

The first indication information and the second indication information are the same as those in the transmission method in Figs. 1a and 1b with a same technical effect, which will not be repeatedly defined herein.

According to the transmission method in the embodiments of the present disclosure, during the uplink aggregation transmission or uplink joint transmission for the uniformly-numbered PDCP SDUs through the plurality transmission units, the PDCP PDUs received by the network side device may probably be out-of-order. For example, the respective PDCP SDUs are transmitted by different transmission units to the network side device at different time points, and the SNs of the PDCP SDUs transmitted by the transmission units are not arranged in the numbering order. At this time, the network side device performs the joint sorting processing on the PDCP PDUs transmitted by the plurality of transmission units through the uplink aggregation transmission or uplink joint transmission, so as to obtain a PDCP PDU sequence capable of being identified and responded by the network side device. The beneficial effects of the transmission method in the embodiments of the present disclosure are the same as those mentioned in the transmission method in Figs. 1a and 1b, and thus will not be repeatedly defined herein.

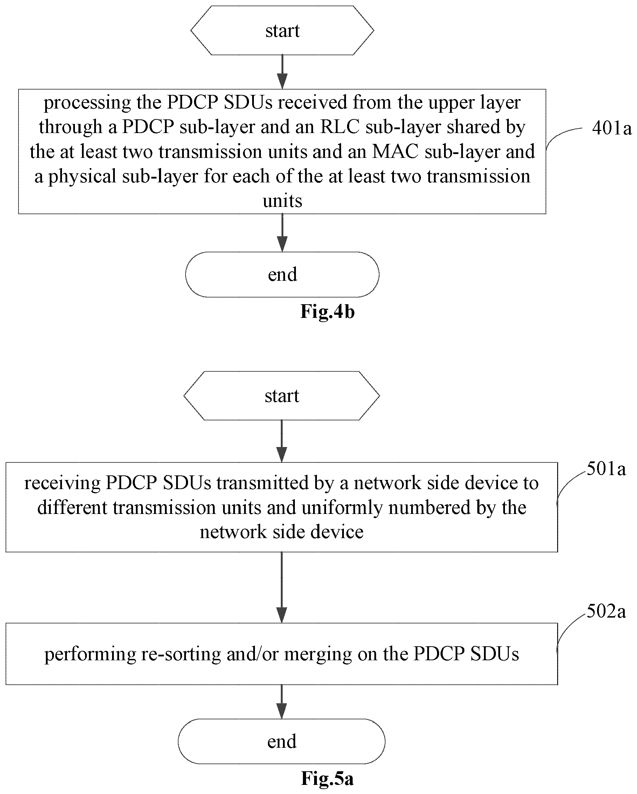

As shown in Figs. 4a and 4b, the present disclosure further provides in some embodiments a transmission method for a network side device. The network side device is used to provide, in a same cell, downlink aggregation transmission or downlink joint transmission for PDCP SDUs to at least two transmission units, and the at least two transmission units support a same network standard.

As shown in Fig. 4a, in the case of the joint transmission, the transmission method includes: Step 401a of uniformly numbering the PDCP SDUs received from an upper layer; and Step 402a of transmitting the PDCP SDUs to the at least two transmission units for joint transmission through at least two bearers in a same cell.

During the implementation, the uniformly numbering the PDCP SDUs specifically includes, during the downlink transmission, determining, by an access network device, uniform PDCP SNs of the PDCP SDUs to be transmitted to the at least two transmission units (i.e., the associated transmission units) for the aggregation transmission or the joint transmission.

It should be appreciated that, in the embodiments of the present disclosure, the PDCP SDUs to be uniformly numbered refer to PDCP SDUs to be transmitted to the transmission unit through the aggregation transmission or the joint transmission, rather than PDCP SDUs to be transmitted among the irrelevant transmission units.

During the implementation, the PDCP SDUs corresponding to each transmission unit may be transmitted independently or jointly. For example, loads of the PDCP SDUs on each carrier are completely the same or completely different from each other, and the PDCP SDUs are transmitted at the physical layer at a same time point or at different time points.

In a possible embodiment of the present disclosure, when the PDCP SDUs are transmitted through the at least two transmission units for the aggregation transmission or the joint transmission through the at least two bearers, a corresponding part of PDCP SDUs are merely transmitted to each transmission unit in the associated transmission units, i.e., different transmission units in the associated transmission units receive the PDCP SDUs with different SNs, respectively.

In this way, it is able to prevent the data packets from being repeatedly transmitted by the associated transmission units, thereby to save network resources.

In another possible embodiment of the present disclosure, when the PDCP SDUs are transmitted through the at least two transmission units for the aggregation transmission or the joint transmission through the at least two bearers, the PDCP SDUs with a same SN are transmitted to each transmission unit in the associated transmission units.

In this way, all the PDCP SDUs are transmitted to each transmission unit, so as to further prevent the occurrence of packet loss.

During the implementation, a bearer matching the PDCP SDU is provided between each transmission unit in the at least two transmission units for the aggregation transmission or the joint transmission and the network side. In addition, after the at least two transmission units have received the PDCP SDUs, the PDCP SDUs are uniformly sorted in accordance with the numbering order of the PDCP SDUs, such that an order of the uniformly sorted PDCP SDUs are same as an order of the uniformly numbered PDCP SDUs.

It should be appreciated that, the transmission method in the embodiments of the present disclosure is similar to that in Fig. 3, and a difference lies in that the transmission method in Fig. 3 is applied for uplink transmission while the transmission method in Fig. 4 is applied for downlink transmission.

As shown in Fig. 4b, in the case of the aggregation transmission, the transmission method includes Step 401b of processing the PDCP SDUs received from the upper layer through a PDCP sub-layer and an RLC sub-layer shared by the at least two transmission units as well as an MAC sub-layer and a physical sub-layer for each of the at least two transmission units.

For example, in an application scenario in Fig. 2c, during the downlink aggregation transmission or downlink joint transmission where the PDCP SDUs are provided to UE A and UE B in a same cell, the received PDCP SDUs are processed through a PDCP sub-layer and an RLC sub-layer shared by UE A and UE B as well as an MAC sub-layer and a physical sub-layer for each of LTE A and LTE B.

In the embodiments of the present disclosure, the network side device is capable of mapping the service data for one transmission unit to a carrier between an associated transmission unit and the network side for transmission, so as to shunt the service data. In addition, the to-be-transmitted PDCP SDUs are uniformly numbered, and when the PDCP SDUs have been received by the at least two associated transmission units, the joint sorting processing is performed on the PDCP SDUs in accordance with the uniform numbering order. The joint sorting processing has a same meaning as that mentioned in the transmission method in Fig. 3, and thus will not be repeatedly defined herein.

In a possible embodiment of the present disclosure, the transmission method further includes: receiving first indication information from each transmission unit, the first indication information being used to indicate that the transmission units at least support the aggregation transmission in a same cell or a same network device or the joint transmission in a same cell; or transmitting second indication information to the transmission units, the second indication information being used to indicate the aggregation transmission or the joint transmission for the transmission units in a same cell.

The first indication information may be received from a master transmission unit in the associated transmission units, or from each transmission unit in the associated transmission units, which will not be further defined herein.

In addition, the first indication information and the second indication information are the same as those in the transmission method in Fig. 1 with a same technical effect, which will not be repeatedly defined herein.

According to the transmission method in the embodiments of the present disclosure, the PDCP SDUs of the service data for one transmission unit are uniformly numbered by the network side device, and then mapped to the bearers between each transmission unit and the network side for transmission, so as to shunt the service data.

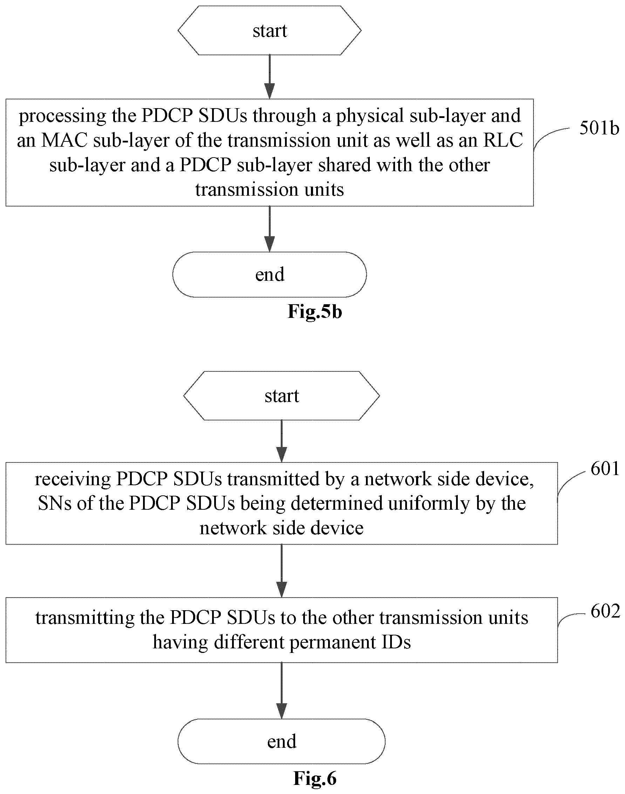

As shown in Figs. 5a and 5b, the present disclosure further provides in some embodiments a transmission method performed by a transmission unit. As shown in Fig. 5a, in the case of the joint transmission, the transmission method includes: Step 501a of receiving PDCP SDUs transmitted by a network side device to different transmission units and uniformly numbered by the network side device; and Step 502a of performing re-sorting and/or merging on the PDCP SDUs.

As shown in Fig. 5b, in the case of the aggregation transmission, the transmission method includes Step 501b of processing the PDCP SDUs through a physical sub-layer and an MAC sub-layer of the transmission unit as well as an RLC sub-layer and a PDCP sub-layer shared with the other transmission units.

During the implementation, the network side device transmits the uniformly numbered PDCP SDUs to the plurality of transmission units having different IDs. An association relationship (e.g., an associated transmission unit) is created among the transmission units having different IDs, and the associated transmission units are in communication with each other via a Sidelink.

In a possible embodiment of the present disclosure, when the PDCP SDUs are transmitted by the network side device to the transmission units having different IDs, the network side device transmits the PDCP SDUs to a plurality of transmission units, so that an independent entity connected to the plurality of transmission units performs sorting processing on the PDCP SDUs received by the transmission units, and then transmits the sorted PDCP SDUs to the corresponding transmission unit.

For example, as shown in Fig. 2a, the PDCP SDUs are jointly transmitted to UE A and UE B in a same cell through two carriers, and UE A and UE B perform the aggregation transmission or the joint transmission and are connected to a newly-added entity 21. During the downlink transmission, the network side device transmits the PDCP SDUs to LTE A and LTE B respectively, and the uniform re-sorting processing is performed on the PDCP SDUs received respectively by UE A and UE B through the newly-added entity 21, and then the sorted PDCP SDUs are transmitted to UE A where the PDCP SDUs need to be used.

In another possible embodiment of the present disclosure, when the PDCP SDUs are transmitted by the network side device to the transmission units having different IDs, the network side device transmits the PDCP SDUs to the plurality of transmission units, and the transmission units are in communication with each other via a Sidelink. In this way, one transmission unit receives a part of PDCP SDUs from the network side and receives the other part of PDCP SDUs from the other transmission units via the Sidelink. Then, the PDCP entity of the transmission unit is reused to perform the uniform re-sorting processing on all the received PDCP SDUs.

For example, as shown in Fig. 2b, the PDCP SDUs are jointly transmitted to UE A and UE B in a same cell through two carriers, UE A and UE B perform the aggregation transmission or the joint transmission, and a PDCP entity of UE A is reused to perform the re-sorting processing on the PDCP SDUs. In the downlink transmission, the network side device transmits the PDCP SDUs to LTE A and UE B, and the UE B forwards the PDCP SDUs received from the network side device to UE A, so that the PDCP entity of UE A performs the re-sorting processing on the PDCP SDUs received from the network side device and UE B.

Further, identical to that mentioned in the transmission method in Fig. 1, the network side device may transmit different PDCP SDUs to different transmission units respectively, or may transmit same PDCP SDUs to each of different transmission units, which will not be further defined herein.

For example, the to-be-transmitted PDU SDUs are uniformly numbered by the network side device, so as to obtain four PDCP SDUs with SNs of 1, 2, 3 and 4. The network side device transmits the PDCP SDUs with the SNs of 1, 2 and 4 to LTE A, and transmits the PDCP SDU with the SN of 3 to UE B. After receiving the PDCP SDUs with the SNs of 1, 2 and 4 from the network side device and the PDCP SDU with the SN of 3 from UE B, UE A performs the re-sorting processing on the four PDCP SDUs in a numbering order of 1, 2, 3 and 4.

In a possible embodiment of the present disclosure, the transmission method further includes: transmitting first indication information to the network side device, the first indication information being used to indicate that the transmission units at least support the aggregation transmission in a same cell or a same network device or the joint transmission in a same cell; or receiving second indication information transmitted by the network side device, the second indication information being used to indicate the aggregation transmission or the joint transmission for the transmission units in a same cell.

In addition, the first indication information and the second indication information are the same as those in the transmission method in Fig. 1 with a same technical effect, which will not be repeatedly defined herein.

According to the transmission method in the embodiments of the present disclosure, the transmission unit receives the uniformly-numbered PDCP SDUs from the network side device and the other transmission units having different IDs, and performs the re-sorting processing on the PDCP SDUs. As a result, it is able to detect the loss or retransmission of the PDCP SDUs in time based on the uniform numbers, thereby to improve the transmission efficiency and reliability of the PDCP SDUs.

As shown in Fig. 6, the present disclosure further provides in some embodiments a transmission method performed by a transmission unit. The transmission unit is used to provide, together with one or more other transmission units, downlink aggregation transmission or downlink joint transmission for PDCP SDUs in a same cell or a same network device. The transmission method includes: Step 601 of receiving PDCP SDUs transmitted by a network side device, SNs of the PDCP SDUs transmitted to the transmission units for downlink aggregation transmission or downlink joint transmission being determined uniformly by the network side device; and Step 602 of transmitting the PDCP SDUs to the other transmission units having different IDs.

The transmission method in the embodiment of the present disclosure is similar to that in Fig. 5, and a difference lies in that, upon the receipt of the PDCP SDUs from the network side device, the transmission unit using the transmission method in this embodiment of the present disclosure transmits the PDCP SDUs to the transmission unit using the transmission method in Fig. 5, so that the transmission unit using the transmission method in Fig. 5 performs the uniform re-sorting process. The beneficial effects of the transmission method in this embodiment of the present disclosure are the same as those of the transmission method in Fig. 5, and thus will not be repeatedly defined herein.

The present disclosure further provides in some embodiments a notification method performed by a transmission unit. The transmission unit supports to provide, together with one or more other transmission units, aggregation transmission or joint transmission (e.g., the aggregation transmission for PDCP SDUs) in a same cell or a same network device, and the transmission unit and the other transmission units support a same network standard. The notification method includes: a first step of transmitting first indication information to a network side device, the first indication information being used to indicate that the transmission units at least support the aggregation transmission in a same cell or a same network device or the joint transmission in a same cell; or a second step of receiving second indication information transmitted by the network side device, the second indication information being used to indicate the aggregation transmission or the joint transmission for the transmission units in a same cell.

It should be appreciated that, in a certain application scenario, merely one of the above steps may be performed. When the first step is performed, it means that the transmission unit reports, on its own initiative, that the transmission units support the aggregation transmission or the joint transmission in a same cell. When the second step is performed, it means that the network side device configures the aggregation transmission or the joint transmission for the transmission units in a same cell.

During the implementation, each of the first indication information and the second indication information has a same meaning as that in the transmission method in Fig. 1, which will thus not be repeatedly defined herein.

In the embodiments of the present disclosure, the notification method differs from the transmission method in Fig. 1 in that, regardless of the uplink transmission or the downlink transmission, the aggregation transmission or the joint transmission for the transmission units in a same cell is indicated through the notification method, so the application range is larger.

The present disclosure further provides in some embodiments a notification method for a network side device. The network side device supports to provide aggregation transmission or joint transmission through at least two transmission units supporting a same network standard in a same cell. The notification method includes: a first step of receiving first indication information from each transmission unit, the first indication information being used to indicate that the transmission units at least support the aggregation transmission in a same cell or a same network device or the joint transmission in a same cell; or a second step of transmitting second indication information to the transmission units, the second indication information being used to indicate the aggregation transmission or the joint transmission for the transmission units in a same cell.

The notification method for the network side device corresponds to the above-mentioned notification method for the transmission unit with a same beneficial effect, which will not be repeatedly defined herein.

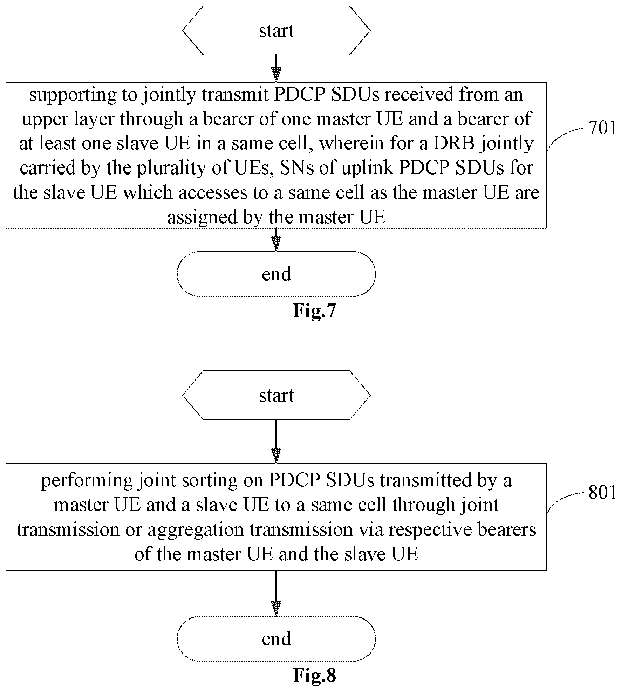

As shown in Fig. 7, the present disclosure further provides in some embodiments a transmission method for joint bearers of a plurality of UEs in a cell, and the transmission method is applied to a LTE. Radio protocols for the plurality of UEs and supporting the joint bearers are located in a same cell, each radio protocol supports to transmit PDCP SDUs received from an upper layer through a bearer of the LTE and a bearer of at least one slave UE in a same cell. The transmission method includes Step 701 of transmitting the PDCP SDUs received from the upper layer through the bearers of the LTEs. For a DRB jointly carried by the plurality of LTEs, SNs of uplink PDCP SDUs for the slave UE which accesses to a same cell as the UE are assigned by the UE.

During the implementation, the UE may be a master UE, e.g., the transmission unit having the PDCP numbering function and/or PDCP sorting function in the transmission method in Fig. 1, and correspondingly, the slave UE is the other transmission unit having a different ID in the transmission method in Fig. 1, which will not be repeatedly defined herein.

It should be appreciated that, the PDCP sorted and/or PDCP numbered PDCP SDUs are transmitted jointly by the master UE and the slave UE in a same cell through their own bearers respectively. To be specific, in a first circumstance, all the PDCP SDUs are transmitted simultaneously by the master UE and the slave UE. In a second circumstance, each PDCP SDU is transmitted by one of the master UE and the slave UE.

In the embodiments of the present disclosure, the master UE is differentiated from the slave LTE, and the master LTE takes charge of uniformly numbering and sorting the PDCP SDUs with a same beneficial effect as the transmission method in Fig. 1, which will not be repeatedly defined herein.

In a possible embodiment of the present disclosure, the UE and the slave UE have different IDs.

In a possible embodiment of the present disclosure, the transmission method further includes: transmitting first indication information to a network side device, the first indication information being used to indicate a master-slave relation between the UEs; or receiving second indication information transmitted by the network side device, the second indication information being used to indicate the master-slave relation between the UEs.

The first indication information and the second indication information correspond to those in the transmission method in Fig. 1 respectively. A difference lies in that, the first indication information and the second indication information in the embodiments of the present disclosure are used to indicate the master-slave relation between the UEs and indicate which one of the master UE and the slave UE to take charge of assigning the SNs of the PDCP SDUs or re-sorting the PDCP SDUs, while the first indication information and the second indication information in the transmission method in Fig. 1 are used to indicate the association relationship among the transmission units, which will not be repeatedly defined herein.

As shown in Fig. 8, the present disclosure further provides in some embodiments a sixth transmission method for a network side device, which includes Step 801 of performing joint sorting on PDCP SDUs transmitted by a master UE and a slave UE to a same cell through joint transmission or aggregation transmission via bearers of the master LTE and the slave LTE. The master UE is configured to perform, together with the slave UE, the joint transmission or aggregation transmission.

In the embodiments of the present disclosure, radio protocols for the plurality of UEs for the joint transmission or aggregation transmission and supporting the joint bearers are located in a same cell, each radio protocol supports to transmit the PDCP SDUs received from an upper layer through a bearer of the UE and a bearer of at least one slave UE in a same cell, and for a DRB jointly carried by the plurality of UEs, SNs of uplink PDCP SDUs for the slave UE which accesses to a same cell as the UE are assigned by the UE.

A joint sorting process in this embodiment of the present disclosure has a same meaning as that in the transmission method in Fig. 3. A difference between the transmission method in this embodiment of the present disclosure and the transmission method in Fig. 3 lies in that, in in this embodiment of the present disclosure, the transmission units for the aggregation transmission or the joint transmission are distinguished as the master UE and the slave UE. The beneficial effects of the transmission method in the embodiments of the present disclosure are the same as those of the transmission method in Fig. 3, and thus will not be repeatedly defined herein.

In a possible embodiment of the present disclosure, the transmission method further includes: receiving first indication information from the master UE, the first indication information being used to indicate a master-slave relation between the LTEs; or transmitting second indication information to the master LTE, the second indication information being used to indicate the master-slave relation between the UEs.

The first indication information and the second indication information correspond to those in the transmission method in Fig. 1 respectively. A difference lies in that, the first indication information and the second indication information in the embodiments of the present disclosure are used to indicate the master-slave relation between the UEs and indicate which one of the master UE and the slave UE to take charge of assigning the SNs of the PDCP SDUs or re-sorting the PDCP SDUs, while the first indication information and the second indication information in the transmission method in Fig. 1 are used to indicate the association relationship among the transmission units, which will not be repeatedly defined herein.

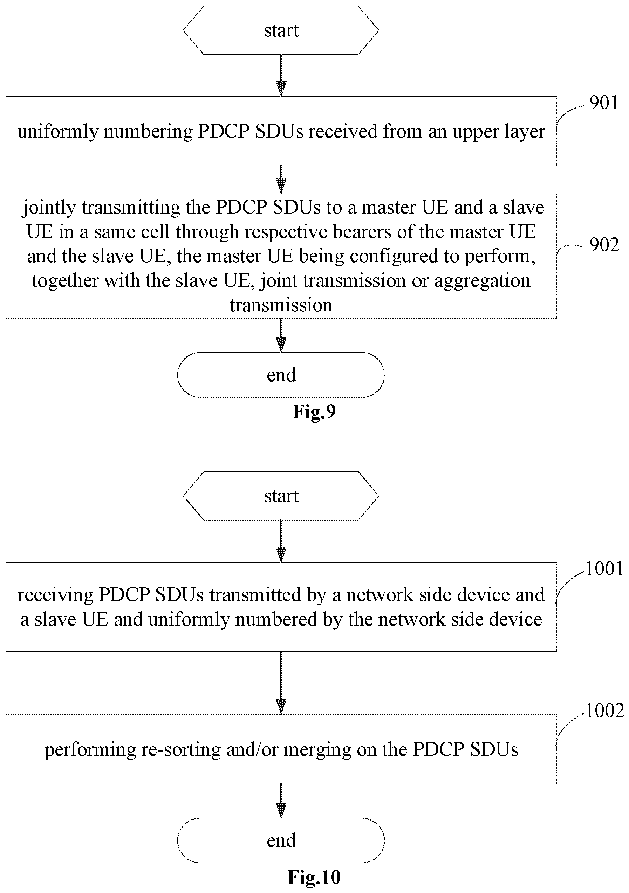

As shown in Fig. 9, the present disclosure further provides in some embodiments a transmission method for a network side device, which includes: Step 901 of uniformly numbering PDCP SDUs received from an upper layer; and Step 902 of transmitting the PDCP SDUs to a master LTE and a slave LTE in a same cell through respective bearers of the master UE and the slave UE, the master UE being configured to perform, together with the slave LTE, joint transmission or aggregation transmission.

Radio protocols for the plurality of UEs for the joint transmission or aggregation transmission and supporting joint bearers are located in a same cell, and each radio protocol supports to receive the PDCP SDUs jointly transmitted by the network side device through the bearer of the master UE and the bearer of the at least one slave UE in a same cell.

The numbering process in in this embodiment of the present disclosure has a same meaning as the numbering process in the transmission method in Fig. 4. A difference between the transmission method in in this embodiment of the present disclosure and the transmission method in Fig. 4 lies in that, in this embodiment of the present disclosure, the transmission units for the aggregation transmission or the joint transmission are distinguished as the master UE and the slave UE. The beneficial effects of the transmission method in this embodiment of the present disclosure are the same as those of the transmission method in Fig. 4, and thus will not be repeatedly defined herein.

In a possible embodiment of the present disclosure, the transmission method further includes: receiving first indication information from the master UE, the first indication information being used to indicate a master-slave relation between the UEs; or transmitting second indication information to the master UE, the second indication information being used to indicate the master-slave relation between the UEs.

The first indication information and the second indication information in this embodiment correspond to those in the transmission method in Fig. 1 respectively. A difference lies in that, the first indication information and the second indication information in this embodiment of the present disclosure are used to indicate the master-slave relation between the UEs and indicate which one of the master UE and the slave UE to take charge of assigning the SNs of the PDCP SDUs or re-sorting the PDCP SDUs, while the first indication information and the second indication information in the transmission method in Fig. 1 are used to indicate the association relationship among the transmission units, which will not be repeatedly defined herein.

As shown in Fig. 10, the present disclosure further provides in some embodiments a transmission method for a master UE, which includes: Step 1001 of receiving PDCP SDUs transmitted respectively by a network side device and a slave UE and uniformly numbered by the network side device, the master UE being configured to perform, together with the slave LTE, joint transmission or aggregation transmission; and Step 1002 of performing re-sorting and/or merging on the PDCP SDUs.

The processing of receiving the PDCP SDUs and the process of performing re-sorting on the PDCP SDUs in this embodiment of the present disclosure have a same meaning as those in the transmission method in Fig. 5 respectively. A difference between the transmission method in this embodiment of the present disclosure and the transmission method in Fig. 5 lies in that, in this embodiment of the present disclosure, the transmission units for the aggregation transmission or the joint transmission are distinguished as the master UE and the slave UE, and the re-sorting processing is performed by the master UE on the PDCP SDUs. The beneficial effects of the transmission method in this embodiment of the present disclosure are the same as those of the transmission method in Fig. 5, and thus will not be repeatedly defined herein.

In a possible embodiment of the present disclosure, the transmission method further includes: transmitting first indication information to the network side device, the first indication information being used to indicate a master-slave relation between the UEs; or receiving second indication information transmitted by the network side device, the second indication information being used to indicate the master-slave relation between the UEs.

The first indication information and the second indication information in this embodiment correspond to those in the transmission method in Fig. 1 respectively. A difference lies in that, the first indication information and the second indication information in this embodiment of the present disclosure are used to indicate the master-slave relation between the UEs and indicate which one of the master UE and the slave UE to take charge of assigning the SNs of the PDCP SDUs or re-sorting the PDCP SDUs, while the first indication information and the second indication information in the transmission method in Fig. 1 are used to indicate the association relationship among the transmission units, which will not be repeatedly defined herein.

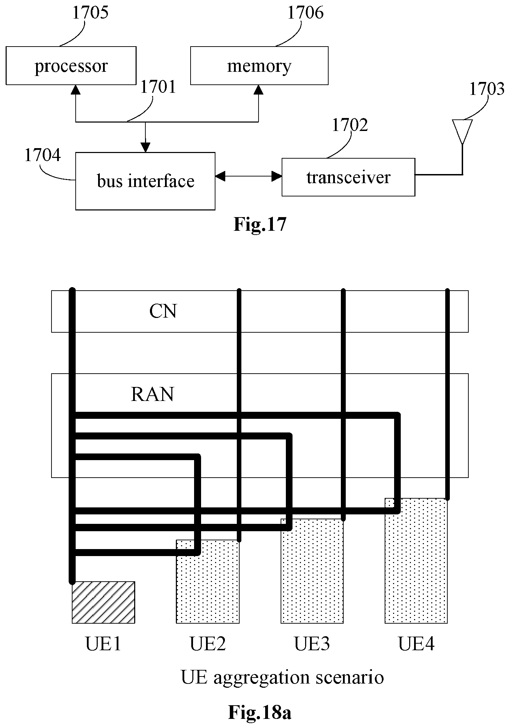

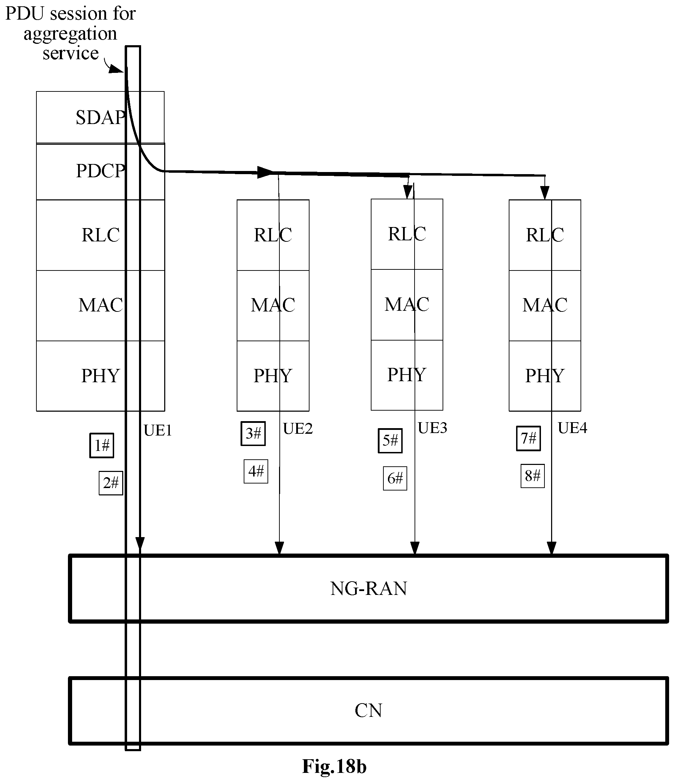

As shown in Figs. 18a and 18b, the present disclosure further provides in some embodiments a transmission method performed by a transmission unit. The transmission unit supports to provide, together with one or more other transmission units, uplink aggregation transmission or uplink joint transmission for data in a same cell or different cells, and the transmission unit and the other transmission units support a same network standard.

The data is a data packet, e.g., at least one of a PDCP SDU, a PDCP PDU, an RLC SDU, an RLC PDU, an MAC SDU, an MAC PDU, or a Transport Block (TB).

In Fig. 18a, a thick solid line represents a path for transmitting and/or forwarding data for the aggregation transmission through LTE1, and three thin solid lines represent paths for transmitting data for UE2, UE3 and UE4 respectively.

As shown in Fig. 18a, in the case of the joint transmission, the transmission method includes Step 1801 of uniformly numbering PDCP SDUs received from an upper layer through a PDCP numbering function and/or a PDCP sorting function, so as to achieve shunting transmission of different PDCP SDUs, or achieve redundancy transmission of a same PDCP SDU.

In the case of the aggregation transmission, the transmission method includes Step 1802 of processing, by LTE1, the received data through any one of sub-layers shared with the other transmission units (e.g., UE2, UE3 and UE4), e.g., a new logical sub-layer on a PDCP sub-layer, the PDCP sub-layer and an RLC sub-layer, as well as an MAC sub-layer and a physical sub-layer of UE1.

The data to be processed by the new logical sub-layer and the PDCP sub-layer is the PDCP SDUs, the data to be processed by the RLC sub-layer is the RLC SDUs, the data to be processed by the MAC sub-layer is the MAC SDUs, and the data to be transmitted by the physical sub-layer is the TBs.

The transmission unit may be a UE or any other transmission unit, which will not be further particularly defined herein. However, for ease of understanding, the following description will be given by taking the UE as an example.

In the embodiments of the present disclosure, the transmission units have different IDs so as to indicate different transmission unit devices. Further, when the transmission unit supports a same network standard as the other transmission units having different IDs, it means that the transmission units provide the uplink aggregation transmission or uplink joint transmission of data to a same cell or different cells through a same network standard.

Based on the above, a scenario where the transmission method is applied includes the following features: there is a combination of a plurality of physical transmitting ends/receiving ends (e.g., the other transmission units having different permanent IDs, e.g., independent IMEI or IMSI, or transmission units having different temporary IDs, e.g., RNTI, and operating in a same network standard) and one receiving end/transmitting end (corresponding to a same cell), and the plurality of transmission units performs the transmission through a same network standard, different from existing single-UE carrier aggregation transmission and Multiple Connection (MC) transmission.

In the embodiments of the present disclosure, in an uplink direction, data from a same application or data source is uniformly numbered by the plurality of transmission units, physically independent of each other, at the PDCP sub-layer through a newly-added logical sub-layer (also called as entity) shared by the transmission units, or the PDCP numbering function and/or PDCP sorting function integrated in the PDCP sub-layer, or the PDCP sub-layer and the RLC sub-layer shared by the transmission units. In this way, it is able to prevent the PDCP SDUs from being shunted erroneously among the transmission units and from being received erroneously at a network side, thereby to improve the transmission performance.

In addition, in the embodiments of the present disclosure, the data from a same application or data source is transmitted through the plurality of transmission units physically independent of each other. Different from the single-UE DC transmission and carrier aggregation transmission, the transmission is performed using the power of the plurality of transmission units, so it is able to break through the limitation of the power of a single LTE. Moreover, the LTEs or transmission units that were irrelevant coordinate with each other for the transmission, so it is able to improve the transmission reliability and the data transmission performance through different transmission units.

In the embodiments of the present disclosure, the plurality of transmission units transmits the data to a same network side device in a same cell or different cells using a same network standard. As compared with an existing MC transmission mode, it is able to reduce the requirement of the UE on the network standard (it is unnecessary to provide a multi-mode LTE supporting various network standards), and enable the LTEs or transmission units which were irrelevant to coordinate with each other for the transmission, thereby to improve the transmission reliability as well as the data transmission performance through different transmission units. In addition, the data is transmitted to a same network side device, so as compared with the existing MC transmission mode, it is unnecessary to collect the data to a same network side, thereby to reduce the data processing complexity at the network side.

During the implementation, there may exist an association relationship among the plurality of transmission units for the uplink aggregation transmission or uplink joint transmission, and this association relationship may be obtained by the network side, so that the network side uniformly plans and processes the data for the associated transmission units in the cases that the uplink aggregation transmission or uplink joint transmission is performed among the transmission units in a cell. Data exchange is performed among the associated transmission units via Sidelink or the like, which will not be further particularly defined herein.

During the implementation, the association relationship may be obtained by the network side as follows. In a first mode, the association relationship is preset in the network side device. For example, an association relationship among UE1, UE2, UE3 and UE4 is preset in a database of a core network, or any other server. In addition, optionally, the association relationship includes a master-slave relation between the UEs. For example, LTE1 is a master LTE, and a peer-to-peer PDU session connection for data service through aggregation transmission is completed by UE1. The other UEs, e.g., UE2, UE3 and UE4, may share relevant Network Attached Storage (NAS) information about the aggregation service in UE1, peer-to-peer PDU session connection NAS information and/or General Packet Radio Service (GPRS) Tunneling Protocol for a user plane (GTP-U) tunnel at the user plane, or the other UEs merely sense information at a radio access (AS) side.

In a second mode, in the process of registering one transmission unit, the other to-be-associated transmission units are also registered through agent. For example, when a transmission unit is registered each time, identification information about the to-be-associated transmission units is provided, so as to indicate the association relationship. Alternatively, the transmission unit is bound in advance to the to-be-associated transmission units at the network side.

In a third mode, each transmission unit is registered independently, and then the association relationship is notified to the network side, i.e., the association relationship is determined with respect to each transmission unit. In this mode, the association relationship among UE1, LTE2, UE3 and LTE4 is written in advance, into card information of the LTE or User Service Description (USD) information, or notified to an NAS layer through an upper layer of the UE.

In addition, information about encryption and/or integrity protection used by the plurality of associated UEs, e.g., UE1, UE2, UE3 and UE4, may be the same, e.g., the information used by UE1 is shared by the other UEs. Alternatively, the information used by the UEs is different, and it is necessary to notify four different pieces of information about encryption and/or integrity protection to the core network and/or base station.

Optionally, when a common layer of the plurality of associated UEs, e.g., UE1, UE2, LTE3 and UE4, is a physical layer, the plurality of UEs corresponds to a same group of antenna ports or different groups of antenna ports but shares a Cell-Radio Network Temporary Identifier (C-RNTI) or any other RNTI. In this case, the base station does not sense UE2, UE3 or UE4, i.e., there is no Radio Resource Control (RRC) connection between the base station and any of UE2, UE3 and UE4.

In addition, for the PDCP numbering function, the PDCP SDUs to be transmitted through different transmission units are uniformly numbered, and then the uniformly numbered PDCP SDUs are uploaded through different transmission units, so that SNs of the PDCP SDUs are different from each other.

For example, the SNs of the uniformly numbered PDCP SDUs include 1, 2, 3, 4, ..., 8. An independent entity transmits the PDCP SDUs with SNs of 1 and 2 to UE1, transmits the PDCP SDUs with SNs of 3 and 4 to UE2, transmits the PDCP SDUs with SNs of 5 and 6 to LTE3, and transmits the PDCP SDUs with SNs of 7 and 8 to UE4.

In this way, it is able to prevent the same PDCP SDU from being repeatedly transmitted by different transmission units. In an application scenario with good communication quality and low packet loss, it is able to improve the transmission efficiency of the PDCP SDUs and save resources. It should be noted that, during the implementation, after the PDCP SDUs are uniformly numbered, the PDCP SDUs with a same SN may also be transmitted through different transmission units.

For example, the SNs of the uniformly numbered PDCP SDUs include 1, 2, ..., 8, and the independent entity transmits the PDCP SDUs with the SNs 1, 2, ..., 8 to each of UE1, UE2, UE3 and UE4, so that the PDCP SDUs received by UE1, UE2, UE3 and UE4 have same SNs.

In this way, it is able to transmit the same PDCP SDU repeatedly by different transmission units. In an application scenario with poor communication quality and high packet loss, it is able to reduce the packet loss for the PDCP SDUs, thereby to improve the transmission reliability of the PDCP SDUs.

For the PDCP sorting function, the PDCP SDUs are received by the plurality of transmission units and uniformly re-stored, so as to prevent the received DCP SDUs from being out-of-order during the uplink joint transmission.

To be specific, the uniformly numbering the PDCP SDUs received from the upper layer includes uniformly numbering, by the plurality of transmission units, the PDCP SDUs through a common protocol data unit entity or a common PDCP sub-layer.

Optionally, the PDCP numbering function and/or the PDCP sorting function are arranged in an independent entity, and the independent entity is shared by all the transmission units.

It should be appreciated that, the independent entity is described from the point of view of a protocol stack, and it is arranged at different layers on the protocol stack from the other entities (e.g., a PDCP entity), rather than a different physical entity device from the other entities.

For example, UE1, UE2, UE3 and UE4 are four UEs associated with each other, and they together provide uplink joint transmission for the PDCP SDUs to a same gNB. At this time, a PDCP entity is shared by UE1, UE2, UE3 and UE4.

The transmission method further includes, in the case that the PDCP numbering function and/or the PDCP sorting function are arranged in the independent entity, transmitting the numbered PDCP SDUs through the independent entity to a PDCP entity of a corresponding transmission unit for processing. For example, the PDCP SDUs are transmitted to the corresponding transmission unit or all the transmission units, which will be described hereinafter.

In the embodiments of the present disclosure, one independent entity may be shared by the associated transmission units, and each transmission unit obtains the uniformly-numbered PDCP SDUs from the independent entity, so that the PDCP SDUs obtained by the associated transmission units have different SNs. In other words, the uniformly-numbered PDCP SDUs are uploaded through different transmission units, so that the SNs of the PDCP SDUs uploaded by different transmission units are different from each other. In this way, it is able to prevent a same PDCP SDU from being repeatedly transmitted by a plurality of transmission units, thereby to improve the transmission efficiency.

It should be noted that, in actual use, in the case that the PDCP numbering function and/or the PDCP sorting function are arranged in the independent entity, the numbered PDCP SDUs are transmitted through the independent entity to each associated transmission unit, i.e., the PDCP SDUs with same SNs are uploaded through different transmission units. In this way, it is able to further prevent the occurrence of packet loss.

The present disclosure further provides in some embodiments a notification method for a LTE. Radio protocols for a plurality of UEs and supporting joint bearers are located in a same cell, each radio protocol supports to transmit PDCP SDUs received from an upper layer through a bearer of the UE and a bearer of at least one slave UE in a same cell, and for a DRB jointly carried by the plurality of UEs, SNs of uplink PDCP SDUs for the slave UE which accesses to a same cell as the UE are assigned by the UE. The notification method includes: a first step of transmitting first indication information to a network side device, the first indication information being used to indicate a master-slave relation between the UEs; or a second step of receiving second indication information transmitted by the network side device, the second indication information being used to indicate the master-slave relation between the UEs.

It should be appreciated that, in a certain application scenario, merely one of the above steps may be performed, wherein when the first step is performed, it means that the master UE selects, on its own initiative, the slave UE and establishes the master-slave relation with the slave UE; when the second step is performed, it means that the network side device configures the master-slave relation between the master UE and the slave UE.

During the implementation, each of the first indication information and the second indication information has a same meaning as that in the transmission method in Fig. 7, which will thus not be repeatedly defined herein.

In this embodiment of the present disclosure, the notification method differs from the transmission method in Fig. 7 in that, regardless of the uplink transmission or the downlink transmission, the master-slave relation between the master UE and the slave UE is indicated through the notification method, so the application range is larger.

The present disclosure further provides in some embodiments a notification method for a network side device. The network side device supports to provide aggregation transmission or joint transmission through at least two transmission units supporting a same network standard in a same cell. The notification method includes: a first step of receiving first indication information from a master UE, the first indication information being used to indicate a master-slave relation between UEs; or a second step of transmitting second indication information to the master UE, the second indication information being used to indicate the master-slave relation between the UEs.

The notification method for the network side device in this embodiment corresponds to the above-mentioned notification method for the UE with a same beneficial effect, which will not be repeatedly defined herein.

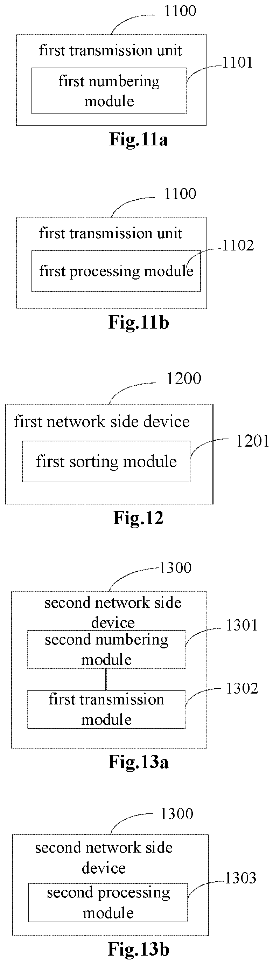

As shown in Figs. 11a and 11b, the present disclosure further provides in some embodiments a transmission unit. The transmission unit supports to provide, together with one or more other transmission units, uplink aggregation transmission or uplink joint transmission for PDCP SDUs in a same cell or a same network device, and the transmission unit supports a same network standard as the other transmission units. As shown in Fig. 11a, in the case of the joint transmission, the transmission unit 1100 includes a first numbering module 1101 configured to uniformly number PDCP SDUs received from an upper layer through a PDCP numbering function and/or a PDCP sorting function. As shown in Fig. 11b, in the case of the aggregation transmission, the transmission unit 1100 includes a first processing module 1102 configured to process the PDCP SDUs received from the upper layer through a PDCP sub-layer and an RLC sub-layer shared with the other transmission units as well as respective MAC sub-layers and respective physical sub-layers of the transmission unit and the other transmission units.

In addition, the PDCP numbering function and/or the PDCP sorting function are arranged in an independent entity, and the independent entity is shared by all the transmission units; or the PDCP numbering function and/or the PDCP sorting function are integrated into a PDCP entity.

In addition, the transmission unit 1100 is configured to: in the case that the PDCP numbering function and/or the PDCP sorting function are arranged in the independent entity, transmit the numbered PDCP SDUs through the independent entity to a PDCP entity of a corresponding transmission unit for processing; or in the case that the PDCP numbering function and/or the PDCP sorting function are integrated in the PDCP entity, transmit the numbered PDCP SDUs through the PDCP entity to a PDCP entity of the other transmission unit for processing, or process the PDCP SDUs directly through the PDCP entity integrated with the PDCP numbering function and/or the PDCP sorting function.

In addition, the transmission unit 1100 further includes: an eighth transmission module configured to transmit first indication information to a network side device, the first indication information being used to indicate that the transmission units at least support the aggregation transmission in a same cell or a same network device or the joint transmission in a same cell; or an eighth reception module configured to receive second indication information transmitted by the network side device, the second indication information being used to indicate the aggregation transmission or the joint transmission for the transmission units in a same cell.

According to the transmission unit 1100 in the embodiments of the present disclosure, the PDCP SDUs received from the upper layer are uniformly numbered through the PDCP numbering function and/or the PDCP sorting function, and then uploaded to the network side device by the plurality of transmission units through the uplink aggregation transmission or uplink joint transmission. As a result, it is able to increase the uplink transmission power of the PDCP SDU, thereby to improve the transmission performance of the PDCP SDUs. The beneficial effects of the transmission unit in this embodiment of the present disclosure are the same as those of the transmission method in Fig. 1, and thus will not be repeatedly defined herein.

As shown in Fig. 12, the present disclosure further provides in some embodiments a network side device 1200, which includes a first sorting module 1201 configured to perform joint sorting processing on PDCP PDUs transmitted by different transmission units in a same cell through uplink aggregation transmission or uplink joint transmission.

In addition, the network side device 1200 further includes: a ninth reception module configured to receive first indication information from the transmission unit, the first indication information being used to indicate that the transmission units at least support the aggregation transmission in a same cell or a same network device or the joint transmission in a same cell; or a ninth transmission module configured to transmit second indication information to the transmission unit, the second indication information being used to indicate the aggregation transmission or the joint transmission for the transmission units in a same cell.

According to the network side device 1200 in the embodiments of the present disclosure, the PDCP PDUs are received from the plurality of transmission units through the uplink aggregation transmission or uplink joint transmission, and then the joint sorting processing is performed on the PDCP PDUs so as to obtain a complete PDCP PDU data flow for the uplink aggregation transmission or uplink joint transmission in Fig. 12. The beneficial effects of the network side device in this embodiment of the present disclosure are the same as those of the method in Fig. 3, and thus will not be repeatedly defined herein.

As shown in Figs. 13a and 13b, the present disclosure further provides in some embodiments a network side device. The network side device is used to provide, in a same cell, downlink aggregation transmission or downlink joint transmission for PDCP SDUs to at least two transmission units. As shown in Fig. 13a, in the case of the joint transmission, the network side device 1300 includes: a second numbering module 1301 configured to uniformly number the PDCP SDUs received from an upper layer; and a first transmission module 1302 configured to transmit the PDCP SDUs to at least two transmission units for joint transmission through at least two bearers in a same cell. As shown in Fig. 13b, in the case of the aggregation transmission, the network side device 1300 includes a second processing module 1303 configured to process the PDCP SDUs received from the upper layer through a PDCP sub-layer and an RLC sub-layer arranged for and shared by the at least two transmission units, as well as an MAC sub-layer and a physical sub-layer for each of the at least two transmission units.

In addition, the network side device 1300 further includes: a reception module configured to receive first indication information from the transmission unit, the first indication information being used to indicate that the transmission units at least support the aggregation transmission in a same cell or a same network device or the joint transmission in a same cell; or a transmission module configured to transmit second indication information to each transmission unit, the second indication information being used to indicate the aggregation transmission or the joint transmission for the transmission units in a same cell.

According to the network side device 1300 in the embodiments of the present disclosure, the PDCP SDUs received from the upper layer are uniformly numbered, and then transmitted to the at least two transmission units for the aggregation transmission or the joint transmission through the at least two bearers, so as to shunt the data without any service awareness. As a result, it is unnecessary to specially process the service, and improve the universality. The beneficial effects of the network side device in this embodiment of the present disclosure are the same as those of the method in Fig. 4, and thus will not be repeatedly defined herein.

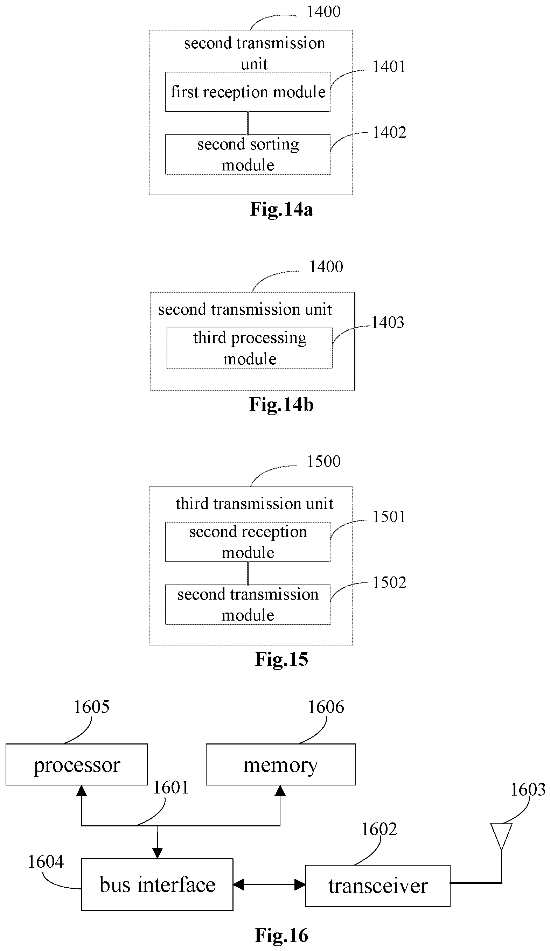

As shown in Figs. 14a and 14b, the present disclosure further provides in some embodiments a transmission unit. As shown in Fig. 14a, in the case of the joint transmission, the transmission unit 1400 includes: a first reception module 1401 configured to receive PDCP SDUs transmitted by a network side device to different transmission units and uniformly numbered by the network side device; and a second sorting module 1402 configured to perform re-sorting and/or merging on the PDCP SDUs.

As shown in Fig. 14b, in the case of the aggregation transmission, the transmission unit 1400 includes a third processing module 1403 configured to process the PDCP SDUs through a physical sub-layer and an MAC sub-layer of the transmission unit as well as an RLC sub-layer and a PDCP sub-layer shared with the other transmission units.

In addition, the transmission unit 1400 further includes: a tenth transmission module configured to transmit first indication information to the network side device, the first indication information being used to indicate that the transmission units at least support the aggregation transmission in a same cell or a same network device or the joint transmission in a same cell; or a tenth reception module configured to receive second indication information transmitted by the network side device, the second indication information being used to indicate the aggregation transmission or the joint transmission for the transmission units in a same cell.

According to the transmission unit 1400 in the embodiments of the present disclosure, after the PDCP SDUs have been transmitted to the at least two transmission units for aggregation transmission or joint transmission, one transmission unit further receives the PDCP SDUs from the other transmission units for aggregation transmission or joint transmission so as to perform the re-sorting and/or merging on the PDCP SDUs within the transmission unit. The beneficial effects of the transmission unit in this embodiment of the present disclosure are the same as those of the method in Fig. 5, and thus will not be repeatedly defined herein.

As shown in Fig. 15, the present disclosure further provides in some embodiments a transmission unit. The transmission unit is used to provide downlink aggregation transmission or downlink joint transmission for PDCP SDUs in a same cell or a same network device together with one or more other transmission units. The transmission unit 1500 includes: a second reception module 1501 configured to receive PDCP SDUs from a network side device, SNs of the PDCP SDUs transmitted to the transmission units for downlink aggregation transmission or downlink joint transmission are determined uniformly by the network side device; and a second transmission module 1502 configured to transmit the PDCP SDUs to the other transmission units having different IDs.

According to the transmission unit 1500 in the embodiments of the present disclosure, after the PDCP SDUs have been transmitted to the at least two transmission units for the aggregation transmission or the joint transmission, the received PDCP SDUs are transmitted to a target transmission unit, so that the target transmission unit performs the re-sorting and/or merging on the PDCP SDUs. The beneficial effects of the transmission unit in this embodiment of the present disclosure are the same as those of the method in Fig. 6, and thus will not be repeatedly defined herein.

The present disclosure further provides in some embodiments a transmission unit. The transmission unit supports to provide, together with one or more other transmission units, aggregation transmission or joint transmission in a same cell or a same network device, and the transmission unit and the other transmission units support a same network standard. The transmission unit includes: a third transmission module configured to transmit first indication information to a network side device, the first indication information being used to indicate that the transmission units at least support the aggregation transmission in a same cell or a same network device or the joint transmission in a same cell; or a third reception module configured to receive second indication information transmitted by the network side device, the second indication information being used to indicate the aggregation transmission or the joint transmission for the transmission units in a same cell.

The transmission unit in this embodiment of the present disclosure is used to implement the steps of the above-mentioned notification method for the transmission unit with a same beneficial effect, which will not be repeatedly defined herein.

The present disclosure further provides in some embodiments a network side device. The network side device supports to provide aggregation transmission or joint transmission through at least two transmission units supporting a same network standard in a same cell. The network side device includes: a fourth reception module configured to receive first indication information from each transmission unit, the first indication information being used to indicate the transmission units at least support the aggregation transmission in a same cell or a same network device or the joint transmission in a same cell; or a fourth transmission module configured to transmit second indication information to each transmission unit, the second indication information being used to indicate the aggregation transmission or the joint transmission for the transmission units in a same cell.

The network side device in this embodiment of the present disclosure is used to implement the steps of the above-mentioned notification method for indicating the association relationship among the transmission units with a same technical effect, which will not be repeatedly defined herein.

The present disclosure further provides in some embodiments a UE. Radio protocols for a plurality of UEs and supporting joint bearers are located in a same cell, each radio protocol supports to transmit PDCP SDUs received from an upper layer through a bearer of the UE and a bearer of at least one slave UE in a same cell, and for a DRB jointly carried by the plurality of LTEs, SNs of uplink PDCP SDUs for the slave UE which accesses to a same cell as the UE are assigned by the UE.

Optionally, the UE and the slave UE have different IDs.

Optionally, the UE further includes: an eleventh transmission module configured to transmit first indication information to a network side device, the first indication information being used to indicate a master-slave relation between the UEs; or an eleventh reception module configured to receive second indication information transmitted by the network side device, the second indication information being used to indicate the master-slave relation between the UEs.

The transmission unit in this embodiment of the present disclosure is used to implement the steps of the above-mentioned method in Fig. 7 with a same technical effect, which will not be repeatedly defined herein.

The present disclosure further provides in some embodiments a network side device, including a third sorting module configured to perform joint sorting on PDCP SDUs transmitted by a master UE and a slave UE to a same cell through joint transmission or aggregation transmission via bearers of the master UE and the slave LTE. The master UE is configured to perform, together with the slave LTE, the joint transmission or aggregation transmission.

Optionally, the network side device further includes: a twelfth reception module configured to receive first indication information from the maser UE, the first indication information being used to indicate a master-slave relation between the UEs; or a twelfth transmission module configured to transmit second indication information to the master UE, the second indication information being used to indicate the master-slave relation between the UEs.

The transmission unit in this embodiment of the present disclosure is used to implement the steps of the above-mentioned method in Fig. 8 with a same technical effect, which will not be repeatedly defined herein.

The present disclosure further provides in some embodiments a network side device, which includes: a second numbering module configured to uniformly number PDCP SDUs received from an upper layer; and a fifth transmission module configured to transmit the PDCP SDUs to a master UE and a slave UE in a same cell through respective bearers of the master UE and the slave UE. The master UE is configured to perform, together with the slave LTE, joint transmission or aggregation transmission.

Optionally, the network side device further includes: a thirteenth reception module configured to receive first indication information from the maser LTE, the first indication information being used to indicate a master-slave relation between the UEs; or a thirteenth transmission module configured to transmit second indication information to the master UE, the second indication information being used to indicate the master-slave relation between the UEs.

The transmission unit in this embodiment of the present disclosure is used to implement the steps of the above-mentioned method in Fig. 9 with a same technical effect, which will not be repeatedly defined herein.

The present disclosure further provides in some embodiments a master UE, which includes: a fifth reception module configured to receive PDCP SDUs transmitted by a network side device and a slave UE and uniformly numbered by the network side device, the master UE being configured to perform, together with the slave UE, joint transmission or aggregation transmission; and a fourth sorting module configured to perform re-sorting and/or merging on the PDCP SDUs.

Optionally, the master LTE further includes: an eleventh transmission module configured to transmit first indication information to a network side device, the first indication information being used to indicate a master-slave relation between the LTEs; or an eleventh reception module configured to receive second indication information transmitted by the network side device, the second indication information being used to indicate the master-slave relation between the UEs.

The transmission unit in this embodiment of the present disclosure is used to implement the steps of the above-mentioned method in Fig. 10 with a same technical effect, which will not be repeatedly defined herein.

The present disclosure further provides in some embodiments a UE. Radio protocols for a plurality of UEs and supporting joint bearers are located in a same cell, each radio protocol supports to transmit PDCP SDUs received from an upper layer through a bearer of the UE and a bearer of at least one slave UE in a same cell, and for a DRB jointly carried by the plurality of LTEs, SNs of uplink PDCP SDUs for the slave UE which accesses to a same cell as the UE are assigned by the UE. The LTE includes: a sixth transmission module configured to transmit first indication information to a network side device, the first indication information being used to indicate a master-slave relation between the UEs; or a sixth reception module configured to receive second indication information transmitted by the network side device, the second indication information being used to indicate the master-slave relation between the UEs.

The transmission unit in the embodiments of the present disclosure is used to implement the steps of the above-mentioned notification method for the UE with a same technical effect, which will not be repeatedly defined herein.

The present disclosure further provides in some embodiments a network side device. The network side device supports to provide aggregation transmission or joint transmission through at least two transmission units supporting a same network standard in a same cell. The network side device includes: a seventh reception module configured to receive first indication information from a master UE, the first indication information being used to indicate a master-slave relation between UEs; or a seventh transmission module configured to transmit second indication information to the master UE, the second indication information being used to indicate the master-slave relation between the UEs.

The network side device in this embodiment of the present disclosure is used to implement the steps of the above-mentioned notification method for indicating the master-slave relation between the UEs with a same technical effect, which will not be repeatedly defined herein.

As shown in Fig. 16, the present disclosure further provides in some embodiments a transmission unit, which includes a bus 1601, a transceiver 1602, an antenna 1603, a bus interface 1604, a processor 1605 and a memory 1606.

The transmission unit supports to provide, together with one or more other transmission units, uplink aggregation transmission or uplink joint transmission for PDCP SDUs in a same cell or a same network device, and the transmission unit supports a same network standard as the other transmission units.

The processor 1605 is configured to uniformly number PDCP SDUs received from an upper layer through a PDCP numbering function and/or a PDCP sorting function.

In a possible embodiment of the present disclosure, the PDCP numbering function and/or the PDCP sorting function are arranged in an independent entity, and the independent entity is shared by all the transmission units; or the PDCP numbering function and/or the PDCP sorting function are integrated into a PDCP entity.

The transceiver 1602 is configured to: in the case that the PDCP numbering function and/or the PDCP sorting function are arranged in the independent entity, transmit the numbered PDCP SDUs through the independent entity to a PDCP entity of a corresponding transmission unit for processing; or in the case that the PDCP numbering function and/or the PDCP sorting function are integrated in the PDCP entity, transmit the numbered PDCP SDUs through the PDCP entity to a PDCP entity of the other transmission unit for processing, or process the PDCP SDUs directly through the PDCP entity integrated with the PDCP numbering function and/or the PDCP sorting function.

In addition, the transceiver 1602 is configured to: transmit first indication information to a network side device, the first indication information being used to indicate that the transmission units at least support the aggregation transmission in a same cell or a same network device or the joint transmission in a same cell; or receive second indication information transmitted by the network side device, the second indication information being used to indicate the aggregation transmission or the joint transmission for the transmission units in a same cell.

The transmission unit in this embodiment of the present disclosure is used to implement the steps of the above-mentioned method in Fig. 1 with a same technical effect, which will not be repeatedly defined herein.

Alternatively, in the case of the joint transmission, the transceiver 1602 is configured to receive PDCP SDUs transmitted by a network side device to different transmission units and uniformly numbered by the network side device, and the processor 1605 is configured to perform re-sorting and/or merging on the PDCP SDUs; or in the case of the aggregation transmission, the processor 1605 is configured to process the PDCP SDUs through a physical sub-layer and an MAC sub-layer of the transmission unit as well as an RLC sub-layer and a PDCP sub-layer shared with the other transmission units.

In addition, the transceiver 1602 is further configured to: transmit first indication information to a network side device, the first indication information being used to indicate that the transmission units at least support the aggregation transmission in a same cell or a same network device or the joint transmission in a same cell; or receive second indication information transmitted by the network side device, the second indication information being used to indicate the aggregation transmission or the joint transmission for the transmission units in a same cell.

The transmission unit in this embodiment of the present disclosure is used to implement the steps of the above-mentioned method in Fig. 5 with a same technical effect, which will not be repeatedly defined herein.

Alternatively, the transmission unit is used to provide downlink aggregation transmission or downlink joint transmission for PDCP SDUs in a same cell or a same network device together with one or more other transmission units. The transceiver 1602 is configured to receive PDCP SDUs from a network side device, and SNs of the PDCP SDUs transmitted to the transmission units for downlink aggregation transmission or downlink joint transmission are determined uniformly by the network side device. The transceiver 1602 is further configured to transmit the PDCP SDUs to the other transmission units having different IDs.

The transmission unit in this embodiment of the present disclosure is used to implement the steps of the above-mentioned method in Fig. 6 with a same technical effect, which will not be repeatedly defined herein.

Alternatively, the transmission unit is used to provide, together with one or more other transmission units, aggregation transmission or joint transmission in a same cell or a same network device, and the transmission unit and the other transmission units support a same network standard. The transceiver 1602 is configured to transmit first indication information to a network side device, and the first indication information is used to indicate that the transmission units at least support the aggregation transmission in a same cell or a same network device or the joint transmission in a same cell; or the transceiver 1602 is configured to receive second indication information transmitted by the network side device, and the second indication information is used to indicate the aggregation transmission or the joint transmission for the transmission units in a same cell.

The transmission unit in this embodiment of the present disclosure is used to implement the steps of the above-mentioned notification method for the transmission unit with a same technical effect, which will not be repeatedly defined herein.

Alternatively, the transmission unit is a LTE. Radio protocols for a plurality of LTEs and supporting joint bearers are located in a same cell, each radio protocol supports to transmit PDCP SDUs received from an upper layer through a bearer of the LTE and a bearer of at least one slave LTE in a same cell, and for a DRB jointly carried by the plurality of UEs, SNs of uplink PDCP SDUs for the slave UE which accesses to a same cell as the UE are assigned by the UE.

Optionally, the UE and the slave UE have different IDs.

Optionally, the transceiver 1602 is further configured to: transmit first indication information to a network side device, the first indication information being used to indicate a master-slave relation between the LTEs; or receive second indication information transmitted by the network side device, the second indication information being used to indicate the master-slave relation between the UEs.

The LTE in this embodiments of the present disclosure is used to implement the steps of the above-mentioned transmission method in Fig. 7 with a same technical effect, which will not be repeatedly defined herein.

Alternatively, the transmission unit is a master UE.

The transceiver 1602 is configured to receive PDCP SDUs transmitted by a network side device and a slave UE and uniformly numbered by the network side device, the master LTE is configured to perform, together with the slave LTE, joint transmission or aggregation transmission, and the processor 1605 is configured to perform re-sorting and/or merging on the PDCP SDUs.

Optionally, the transceiver 1602 is further configured to: transmit first indication information to a network side device, the first indication information being used to indicate a master-slave relation between the LTEs; or receive second indication information transmitted by the network side device, the second indication information being used to indicate the master-slave relation between the UEs.

The master LTE in this embodiment of the present disclosure is used to implement the steps of the above-mentioned transmission method in Fig. 10 with a same technical effect, which will not be repeatedly defined herein.

Alternatively, the transmission unit is a LTE. Radio protocols for a plurality of LTEs and supporting joint bearers are located in a same cell, each radio protocol supports to transmit PDCP SDUs received from an upper layer through a bearer of the LTE and a bearer of at least one slave LTE in a same cell, and for a DRB jointly carried by the plurality of UEs, SNs of uplink PDCP SDUs for the slave UE which accesses to a same cell as the UE are assigned by the UE. The transceiver 1602 is configured to: transmit first indication information to a network side device, the first indication information being used to indicate a master-slave relation between the UEs; or receive second indication information transmitted by the network side device, the second indication information being used to indicate the master-slave relation between the UEs.

The transmission unit in this embodiment of the present disclosure is used to implement the steps of the above-mentioned notification method for the UE with a same technical effect, which will not be repeatedly defined herein.

Preferably, the present disclosure further provides in some embodiments a transmission unit, which includes a processor 1605, a memory 1606, and a computer program stored in the memory 1606 and executed by the processor 1605. The computer program is executed by the processor 1605, so as to implement the steps of the transmission method in Fig. 1, 5, 6, 7 or 10, or implement the steps of the notification method for the transmission unit, or implement the steps of the notification method for the UE, with a same technical effect, which will not be repeatedly defined herein.

As shown in Fig. 17, the present disclosure further provides in some embodiments a network side device, which includes a bus 1701, a transceiver 1702, an antenna 1703, a bus interface 1704, a processor 1705 and a memory 1706.

The processor 1705 is configured to perform joint sorting processing on PDCP PDUs transmitted by different transmission units in a same cell through uplink aggregation transmission or uplink joint transmission.

In addition, the transceiver 1702 is configured to: receive first indication information from the transmission unit, the first indication information being used to indicate that the transmission units at least support the aggregation transmission in a same cell or a same network device or the joint transmission in a same cell; or transmit second indication information to the transmission unit, the second indication information being used to indicate the aggregation transmission or the joint transmission for the transmission units in a same cell.

The network side device in this embodiment of the present disclosure is used to implement the steps of the above-mentioned method in Fig. 3 with a same technical effect, which will not be repeatedly defined herein.

Alternatively, the network side device is used to provide, in a same cell, downlink aggregation transmission or downlink joint transmission for PDCP SDUs to at least two transmission units. In the case of the joint transmission, the processor 1705 is configured to uniformly number the PDCP SDUs received from an upper layer, and the transceiver 1702 is configured to transmit the PDCP SDUs to at least two transmission units for joint transmission through at least two bearers in a same cell. In the case of the aggregation transmission, the processor 1705 is configured to process the PDCP SDUs received from the upper layer through a PDCP sub-layer and an RLC sub-layer shared by the at least two transmission units and an MAC sub-layer and a physical sub-layer for each of the at least two transmission units.

In addition, the transceiver 1702 is further configured to: receive first indication information from the transmission unit, the first indication information being used to indicate that the transmission units at least support the aggregation transmission in a same cell or a same network device or the joint transmission in a same cell; or transmit second indication information to the transmission unit, the second indication information being used to indicate the aggregation transmission or the joint transmission for the transmission units in a same cell.

The network side device in this embodiment of the present disclosure is used to implement the steps of the above-mentioned method in Fig. 4 with a same technical effect, which will not be repeatedly defined herein.

Alternatively, the transceiver 1702 is configured to: receive first indication information from the transmission unit, the first indication information being used to indicate that the transmission units at least support the aggregation transmission in a same cell or a same network device or the joint transmission in a same cell; or transmit second indication information to the transmission unit, the second indication information being used to indicate the aggregation transmission or the joint transmission for the transmission units in a same cell.

The network side device in this embodiment of the present disclosure is used to implement the steps of the above-mentioned notification method for indicating the association relationship among the transmission units with a same technical effect, which will not be repeatedly defined herein.

Alternatively, the processor 1705 is configured to perform joint sorting on PDCP SDUs transmitted by a master UE and a slave UE to a same cell through joint transmission or aggregation transmission via bearers of the master UE and the slave UE, and the master UE is configured to perform, together with the slave UE, the joint transmission or aggregation transmission.

Optionally, the transceiver 1702 is configured to: receive first indication information from the master UE, the first indication information being used to indicate a master-slave relation between the LTEs; or transmit second indication information to the master LTE, the second indication information being used to indicate the master-slave relation between the UEs.

The network side device in this embodiment of the present disclosure is used to implement the steps of the above-mentioned method in Fig. 8 with a same beneficial effect, which will not be repeatedly defined herein.

Alternatively, the processor 1705 is configured to uniformly number PDCP SDUs received from an upper layer, the transceiver 1702 is configured to transmit the PDCP SDUs to a master LTE and a slave LTE in a same cell through respective bearers of the master UE and the slave UE, and the master UE is configured to perform, together with the slave LTE, joint transmission or aggregation transmission.

Optionally, the transceiver 1702 is further configured to: receive first indication information from the master UE, the first indication information being used to indicate a master-slave relation between the LTEs; or transmit second indication information to the master LTE, the second indication information being used to indicate the master-slave relation between the UEs.

The network side device in this embodiment of the present disclosure is used to implement the steps of the above-mentioned method in Fig. 9 with a same beneficial effect, which will not be repeatedly defined herein.

Alternatively, the transceiver 1702 is configured to: receive first indication information from the master UE, the first indication information being used to indicate a master-slave relation between the LTEs; or transmit second indication information to the master LTE, the second indication information being used to indicate the master-slave relation between the UEs.

The network side device in this embodiment of the present disclosure is used to implement the steps of the above-mentioned notification method for indicating the master-slave relation between the UEs with a same beneficial effect, which will not be repeatedly defined herein.

In Fig. 17, bus architecture (represented by the bus 1701) may include a number of buses and bridges connected to each other, so as to connect various circuits for one or more processors 1705 and one or more memories 1706. In addition, as is known in the art, the bus 1701 may be used to connect any other circuits, such as a circuit for a peripheral device, a circuit for a voltage stabilizer and a power management circuit. The bus interface 1704 may be provided between the bus 1701 and the transceiver 1702, and the transceiver 1702 may consist of one element, or more than one elements, e.g., transmitters and receivers for communication with any other devices over a transmission medium. Data processed by the processor 1705 may be transmitted on a wireless medium via the antenna 1703. Further, the antenna 1703 may further receive data and transmit the data to the processor 1705.

The processor 1705 may take charge of managing the bus 1701 as well as general processings, and may further provide various functions such as timing, peripheral interfacing, voltage adjustment, power source management and any other control functions. The memory 1706 may store therein data for the operation of the processor 1705.

In a possible embodiment of the present disclosure, the processor 1705 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD).

The present disclosure further provides in some embodiments a computer-readable storage medium storing therein a computer program. The computer program is executed by a processor, so as to implement the steps of the transmission method in Fig. 1, 3, 4, 5, 6, 8 or 9, or implement the steps of the notification method for the transmission unit or network side device, or implement the step of the notification method for the UE or network side device, with a same technical effect, which will not be repeatedly defined herein.

The computer-readable storage medium may be, e.g., a read-only memory (Read-Only Memory, ROM), a random access memory (Random Access Memory, RAM), a magnetic disk or an optical disk.

It should be appreciated that, such words as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

It should be appreciated that, units and steps described in the embodiments of the present disclosure are implemented in the form of electronic hardware, or a combination of a computer program and the electronic hardware. Whether or not these functions are executed by hardware or software depends on specific applications or design constraints of the technical solution. Different methods are adopted with respect to the specific applications so as to achieve the described functions, without departing from the scope of the present disclosure.

It should be further appreciated that, for convenience and clarification, operation procedures of the system, device and units described hereinabove refer to the corresponding procedures in the method embodiment, and thus will not be repeatedly defined herein.

It should be further appreciated that, the device and method are implemented in any other ways. For example, the embodiments for the apparatus is merely for illustrative purposes, and the modules or units are provided merely on the basis of their logic functions. During the actual application, some modules or units are combined together or integrated into another system. Alternatively, some functions of the module or units are omitted or not executed. In addition, the coupling connection, direct coupling connection or communication connection between the modules or units is implemented via interfaces, and the indirect coupling connection or communication connection between the modules or units is implemented in an electrical or mechanical form or in any other form.

The units are, or are not, physically separated from each other. The units for displaying are, or are not, physical units, i.e., they are arranged at an identical position, or distributed on a plurality of network elements. Parts or all of the units are selected in accordance with the practical need, so as to achieve the purpose of the present disclosure.

In addition, the functional units in the embodiments of the present disclosure are integrated into a processing unit, or the functional units exist independently, or two or more functional units are combined together.

In the case that the functional units are implemented in a software form and sold or used as a separate product, they are stored in a computer-readable medium. Based on this, the technical solutions of the present disclosure, partial or full, or parts of the technical solutions of the present disclosure contributing to the related art, appear in the form of software products, which are stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The person skilled in the art understands that, all or parts of the steps in the method may be implemented by related hardware under the control of a computer program. The computer program may be stored in a computer-readable storage medium, and it may be executed so as to implement the steps in the above-mentioned method embodiments. The storage medium may be a magnetic disk, an optical disk, an ROM or an RAM.

The embodiments of the present disclosure have been described above in conjunction with the drawings, but the present disclosure is not limited thereto. The above-mentioned specific implementations are only illustrative and not restrictive. Under the teaching of the present disclosure, many forms can be made without departing from the principle of the present disclosure and the protection scope of the claims, all of which are within the protection of the present disclosure.

## Claims

1. A transmission method performed by a transmission unit, the transmission unit supporting to provide, together with one or more other transmission units, uplink aggregation transmission or uplink joint transmission for Packet Data Convergence Protocol (PDCP) Service Data units (SDUs) in a same cell or a same network device, the transmission unit supporting a same network standard as the other transmission units, the transmission method comprising:
in the case of the joint transmission, utilizing a PDCP numbering function and/or a PDCP sorting function, to uniformly number PDCP SDUs received from an upper layer; or
in the case of the aggregation transmission, utilizing a PDCP sub-layer and a Radio Link Control (RLC) sub-layer that are used to be shared with the other transmission units, as well as respective Medium Access Control (MAC) sub-layers and respective physical sub-layers of the transmission unit and the other transmission units, to process the PDCP SDUs received from the upper layer.

2. The transmission method according to claim 1, wherein
the PDCP numbering function and/or the PDCP sorting function are arranged in an independent entity, and the independent entity is shared by all of the transmission units; or
the PDCP numbering function and/or the PDCP sorting function are integrated into a PDCP entity.

3. The transmission method according to claim 1, further comprising:
in the case that the PDCP numbering function and/or the PDCP sorting function are arranged in the independent entity, transmitting, by the independent entity, each of the numbered PDCP SDUs to a PDCP entity of a corresponding transmission unit for processing; or
in the case that the PDCP numbering function and/or the PDCP sorting function are integrated in the PDCP entity, transmitting, by the PDCP entity, the numbered PDCP SDUs to a PDCP entity of the other transmission unit for processing, or processing, by the PDCP entity integrated with the PDCP numbering function and/or the PDCP sorting function, the numbered PDCP SDUs directly.

4. The transmission method according to claim 1, further comprising:
transmitting first indication information to a network side device, the first indication information being used to indicate that the transmission units at least support the aggregation transmission in a same cell or a same network device or the joint transmission in a same cell; or
receiving second indication information transmitted by the network side device, the second indication information being used to indicate the aggregation transmission or the joint transmission for the transmission units in a same cell.

5. A transmission method performed by a network side device, comprising:
performing joint sorting processing on PDCP Protocol Data Units (PDUs), the PDCP PDUs being transmitted by different transmission units in a same cell through uplink aggregation transmission or uplink joint transmission.

6. The transmission method according to claim 5, further comprising:
receiving first indication information from the transmission unit, the first indication information being used to indicate that the transmission units at least support the aggregation transmission in a same cell or a same network device or the joint transmission in a same cell; or
transmitting second indication information to the transmission units, the second indication information being used to indicate the aggregation transmission or the joint transmission for the transmission units in a same cell.

7. A transmission method performed by a network side device, the network side device being used to provide, in a same cell, downlink aggregation transmission or downlink joint transmission for PDCP SDUs to at least two transmission units, the transmission method comprising:
in the case of the joint transmission, uniformly numbering the PDCP SDUs received from an upper layer, and jointly transmitting, through at least two bearers in a same cell, the PDCP SDUs to at least two transmission units configured for performing the joint transmission; or
in the case of the aggregation transmission, processing, through a PDCP sub-layer and an RLC sub-layer that are arranged for and shared by the at least two transmission units, as well as an MAC sub-layer and a physical sub-layer that are arranged for each of the at least two transmission units, the PDCP SDUs received from the upper layer.

8. The transmission method according to claim 7, further comprising:
receiving first indication information from the transmission unit, the first indication information being used to indicate that the transmission units at least support the aggregation transmission in a same cell or a same network device or the joint transmission in a same cell; or
transmitting second indication information to the transmission units, the second indication information being used to indicate the aggregation transmission or the joint transmission for the transmission units in a same cell.

9. A transmission method performed by a transmission unit, comprising:
receiving PDCP SDUs, the PDCP SDUs being transmitted by a network side device to different transmission units and uniformly numbered by the network side device, and performing re-sorting and/or merging on the PDCP SDUs; or
utilizing a physical sub-layer and an MAC sub-layer of the transmission unit, as well as an RLC sub-layer and a PDCP sub-layer shared with another transmission unit, to process PDCP SDUs.

10. The transmission method according to claim 9, further comprising:
transmitting first indication information to the network side device, the first indication information being used to indicate that the transmission units at least support aggregation transmission in a same cell or a same network device or joint transmission in a same cell; or
receiving second indication information transmitted by the network side device, the second indication information being used to indicate the aggregation transmission or the joint transmission for the transmission units in a same cell.

11. A transmission method performed by a transmission unit, the transmission unit being used to provide, together with one or more other transmission units, downlink aggregation transmission or downlink joint transmission for PDCP SDUs in a same cell or a same network device, the transmission method comprising:
receiving PDCP SDUs transmitted by a network side device, wherein Sequence Numbers (SNs) of the PDCP SDUs transmitted to the transmission units for downlink aggregation transmission or downlink joint transmission are determined uniformly by the network side device; and
transmitting the PDCP SDUs to the other transmission units.

12. A notification method performed by a transmission unit, the transmission unit supporting to provide, together with other transmission units, aggregation transmission or joint transmission in a same cell, the transmission unit and the other transmission units supporting a same network standard, the notification method comprising:
transmitting first indication information to a network side device, the first indication information being used to indicate that the transmission units at least support the aggregation transmission in a same cell or a same network device or the joint transmission in a same cell; or
receiving second indication information transmitted by the network side device, the second indication information being used to indicate the aggregation transmission or the joint transmission for the transmission units in a same cell.

13. A notification method performed by a network side device, the network side device supporting to provide aggregation transmission or joint transmission through at least two transmission units supporting a same network standard in a same cell, the notification method comprising:
receiving first indication information from each of transmission units, the first indication information being used to indicate that the transmission units at least support the aggregation transmission in a same cell or a same network device or the joint transmission in a same cell; or
transmitting second indication information to the transmission units, the second indication information being used to indicate the aggregation transmission or the joint transmission for the transmission units in a same cell.

14. A transmission method for joint bearers of a plurality of User Equipments (UEs) in a cell, the transmission method being performed by the UE, wherein
radio protocols for the plurality of UEs and supporting the joint bearers are located in a same cell, the radio protocols support to transmit, through respective bearers of the UE and at least one slave UE, PDCP SDUs received from an upper layer in a same cell, and for a Data Radio Bearer (DRB) jointly carried by the plurality of LTEs, a SN of an uplink PDCP SDU for the slave LTE which accesses to a same cell as the UE is assigned by the UE.

15. The transmission method according to claim 14, wherein the UE and the slave UE have different Identities (IDs).

16. The transmission method according to claim 14, further comprising:
transmitting first indication information to a network side device, the first indication information being used to indicate a master-slave relation between the UEs; or
receiving second indication information transmitted by the network side device, the second indication information being used to indicate a master-slave relation between the UEs.

17. A transmission method performed by a network side device, comprising:
performing joint sorting on PDCP SDUs, the PDCP SDUs being transmitted by a master LTE and a slave LTE to a same cell through joint transmission or aggregation transmission via respective bearers of the master UE and the slave UE, wherein the master LTE is configured to perform, together with the slave LTE, the joint transmission or aggregation transmission.

18. The transmission method according to claim 17, further comprising:
receiving first indication information from the maser LTE, the first indication information being used to indicate a master-slave relation between the LTEs; or
transmitting second indication information to the master LTE, the second indication information being used to indicate the master-slave relation between the UEs.

19. A transmission method performed by a network side device, comprising:
uniformly numbering PDCP SDUs received from an upper layer; and
jointly transmitting the PDCP SDUs to a master UE and a slave UE in a same cell through respective bearers of the master UE and the slave UE, the master UE being configured to perform, together with the slave LTE, joint transmission or aggregation transmission.

20. The transmission method according to claim 19, further comprising:
receiving first indication information from the maser LTE, the first indication information being used to indicate a master-slave relation between the LTEs; or
transmitting second indication information to the master LTE, the second indication information being used to indicate the master-slave relation between the UEs.

21. A transmission method performed by a master LTE, comprising:
receiving PDCP SDUs, wherein the PDCP SDUs are transmitted by a network side device and a slave LTE respectively, and are uniformly numbered by the network side device, and the master UE is configured to perform, together with the slave UE, joint transmission or aggregation transmission;
performing re-sorting and/or merging on the PDCP SDUs.

22. The transmission method according to claim 21, further comprising:
transmitting first indication information to a network side device, the first indication information being used to indicate a master-slave relation between the UEs; or
receiving second indication information transmitted by the network side device, the second indication information being used to indicate the master-slave relation between the UEs.

23. A notification method performed by a LTE, wherein radio protocols for a plurality of LTEs and supporting joint bearers are located in a same cell, the radio protocols support to transmit, through respective bearers of the UE and at least one slave UE, PDCP SDUs received from an upper layer in a same cell, and for a DRB jointly carried by the plurality of UEs, a SN of an uplink PDCP SDU for the slave UE which accesses to a same cell as the UE is assigned by the UE, wherein the notification method comprises:
transmitting first indication information to a network side device, the first indication information being used to indicate a master-slave relation between the UEs; or
receiving second indication information transmitted by the network side device, the second indication information being used to indicate the master-slave relation between the UEs.

24. A notification method performed by a network side device, the network side device supporting to provide aggregation transmission or joint transmission through at least two transmission units supporting a same network standard in a same cell, the notification method comprising:
receiving first indication information from a master LTE, the first indication information being used to indicate a master-slave relation between UEs; or
transmitting second indication information to the master LTE, the second indication information being used to indicate the master-slave relation between the UEs.

25. A transmission unit, wherein
the transmission unit supports to provide, together with one or more other transmission units, uplink aggregation transmission or uplink joint transmission for PDCP SDUs in a same cell or a same network device, and the transmission unit supports a same network standard as the other transmission units, wherein the transmission unit comprises a processor and a transceiver, wherein the processor is configured to: in the case of the joint transmission, utilize a PDCP numbering function and/or a PDCP sorting function, to uniformly number PDCP SDUs received from an upper layer; or in the case of the aggregation transmission, utilize a PDCP sub-layer and a RLC sub-layer that are used to be shared with the other transmission units, as well as respective MAC sub-layers and respective physical sub-layers of the transmission unit and the other transmission units, to process the PDCP SDUs received from the upper layer; or
the transmission unit comprises a processor and a transceiver, wherein in the case of the joint transmission, the transceiver is configured to receive PDCP SDUs, the PDCP SDUs being transmitted by a network side device to different transmission units and uniformly numbered by the network side device, and the processor is configured to perform re-sorting and/or merging on the PDCP SDUs; or in the case of the aggregation transmission, the processor is configured to utilize a physical sub-layer and an MAC sub-layer of the transmission unit, as well as an RLC sub-layer and a PDCP sub-layer shared with another transmission unit, to process PDCP SDUs; or
the transmission unit is used to provide, together with one or more other transmission units, downlink aggregation transmission or downlink joint transmission for PDCP SDUs in a same cell or a same network device, the transmission unit comprises a processor and a transceiver, the transceiver is configured to receive PDCP SDUs transmitted by a network side device, wherein SNs of the PDCP SDUs transmitted to the transmission units for downlink aggregation transmission or downlink joint transmission are determined uniformly by the network side device, and the transceiver is further configured to transmit the PDCP SDUs to the other transmission units; or
the transmission unit supports to provide, together with other transmission units, aggregation transmission or joint transmission in a same cell, the transmission unit and the other transmission units support a same network standard, the transmission unit comprises a processor and a transceiver, wherein the transceiver is configured to transmit first indication information to a network side device, the first indication information being used to indicate that the transmission units at least support the aggregation transmission in a same cell or a same network device or the joint transmission in a same cell; or the transceiver is configured to receive second indication information transmitted by the network side device, the second indication information being used to indicate the aggregation transmission or the joint transmission for the transmission units in a same cell; or
the transmission unit is a UE, radio protocols for the plurality of LTEs and supporting the joint bearers are located in a same cell, the radio protocols support to transmit, through respective bearers of the UE and at least one slave UE, PDCP SDUs received from an upper layer in a same cell, and for a DRB jointly carried by the plurality of LTEs, a SN of an uplink PDCP SDU for the slave LTE which accesses to a same cell as the UE is assigned by the UE; or
the transmission unit is a LTE, the transmission unit is a LTE, radio protocols for a plurality of LTEs and supporting joint bearers are located in a same cell, the radio protocols support to transmit, through respective bearers of the UE and at least one slave UE, PDCP SDUs received from an upper layer in a same cell, and for a DRB jointly carried by the plurality of UEs, a SN of an uplink PDCP SDU for the slave UE which accesses to a same cell as the UE is assigned by the UE, wherein the UE comprises a processor and a transceiver, wherein the transceiver is configured to: transmit first indication information to a network side device, the first indication information being used to indicate a master-slave relation between the UEs; or receive second indication information transmitted by the network side device, the second indication information being used to indicate the master-slave relation between the UEs.

26. A network side device, wherein
the network side device comprises a processor and a transceiver, wherein the processor is configured to, in the case of joint transmission, perform joint sorting processing on PDCP PDUs, the PDCP PDUs being transmitted by different transmission units in a same cell through uplink aggregation transmission or uplink joint transmission; or the processor is configured to, in the case of aggregation transmission, perform processing through an MAC sub-layer and a physical sub-layer of the network side device, as well as a PDCP sub-layer and an RLC sub-layer that are shared by the network side device and another transmission unit; or
the network side device is used to provide, in a same cell, downlink aggregation transmission or downlink joint transmission for PDCP SDUs to at least two transmission units, and the network side device comprises a processor and a transceiver, wherein the processor is configured to, in the case of the joint transmission, uniformly number the PDCP SDUs received from an upper layer, and the transceiver is used for a first transmission module configured to jointly transmit the PDCP SDUs to at least two transmission units for joint transmission through at least two bearers in a same cell; or the processor is configured to, in the case of the aggregation transmission, process, through a PDCP sub-layer and an RLC sub-layer that are arranged for and shared by the at least two transmission units, as well as an MAC sub-layer and a physical sub-layer that are arranged for each of the at least two transmission units, the PDCP SDUs received from the upper layer; or
the network side device supports to provide aggregation transmission or joint transmission through at least two transmission units supporting a same network standard in a same cell, and the network side device comprises a processor and a transceiver, wherein the transceiver is configured to receive first indication information from each of transmission units, the first indication information being used to indicate that the transmission units at least support the aggregation transmission in a same cell or a same network device or the joint transmission in a same cell; or the transceiver is configured to transmit second indication information to the transmission units, the second indication information being used to indicate the aggregation transmission or the joint transmission for the transmission units in a same cell; or
the network side device comprises a processor and a transceiver, the processor is configured to perform joint sorting on PDCP SDUs, the PDCP SDUs being transmitted by a master UE and a slave LTE to a same cell through joint transmission or aggregation transmission via respective bearers of the master UE and the slave UE, wherein the master LTE is configured to perform, together with the slave LTE, the joint transmission or aggregation transmission; or
the network side device comprises a processor and a transceiver, the processor is configured to uniformly number PDCP SDUs received from an upper layer, the transceiver is configured to jointly transmit the PDCP SDUs to a master UE and a slave UE in a same cell through respective bearers of the master UE and the slave UE, the master LTE is configured to perform, together with the slave LTE, joint transmission or aggregation transmission; or
the network side device comprises a processor and a transceiver, wherein the transceiver is configured to: receive first indication information from a master UE, the first indication information being used to indicate a master-slave relation between UEs; or transmit second indication information to the master LTE, the second indication information being used to indicate a master-slave relation between the UEs.

27. A transmission unit, wherein
the transmission unit supports to provide, together with one or more other transmission units, uplink aggregation transmission or uplink joint transmission for PDCP SDUs in a same cell or a same network device, and the transmission unit supports a same network standard as the other transmission units, wherein the transmission unit comprises a first numbering module or a first processing module, wherein the first numbering module is configured to, in the case of the joint transmission, utilize a PDCP numbering function and/or a PDCP sorting function, to uniformly number PDCP SDUs received from an upper layer; or the first processing module is configured to, in the case of the aggregation transmission, utilize a PDCP sub-layer and a RLC sub-layer that are used to be shared with the other transmission units, as well as respective MAC sub-layers and respective physical sub-layers of the transmission unit and the other transmission units, to process the PDCP SDUs received from the upper layer; or
the transmission unit comprises: in the case of the joint transmission, a first reception module configured to receive PDCP SDUs transmitted by a network side device to different transmission units and uniformly numbered by the network side device, and a second sorting module configured to perform re-sorting and/or merging on the PDCP SDU; or in the case of the aggregation transmission, a third processing module configured to utilize a physical sub-layer and an MAC sub-layer of the transmission unit, as well as an RLC sub-layer and a PDCP sub-layer shared with another transmission unit, to process PDCP SDUs; or
the transmission unit is used to provide, together with one or more other transmission units, downlink aggregation transmission or downlink joint transmission for PDCP SDUs in a same cell or a same network device, the transmission unit comprises: a second reception module configured to receive PDCP SDUs transmitted by a network side device, wherein SNs of the PDCP SDUs transmitted to the transmission units for downlink aggregation transmission or downlink joint transmission are determined uniformly by the network side device; and a second transmission module configured to transmit the PDCP SDUs to the other transmission units; or
the transmission unit supports to provide, together with one or more other transmission units, aggregation transmission or joint transmission of PDCP SDUs in a same cell or a same network device, and the transmission unit and the other transmission units support a same network standard, wherein the transmission unit comprises: a third transmission module configured to transmit first indication information to a network side device, the first indication information being used to indicate that the transmission units at least support the aggregation transmission in a same cell or a same network device or the joint transmission in a same cell; or a third reception module configured to receive second indication information transmitted by the network side device, the second indication information being used to indicate the aggregation transmission or the joint transmission for the transmission units in a same cell; or
the transmission unit is a master UE, wherein the master UE comprises: a fifth reception module configured to receive PDCP SDUs transmitted respectively by a network side device and a slave UE and uniformly numbered by the network side device, the master LTE being configured to perform, together with the slave LTE, joint transmission or aggregation transmission; and a fourth sorting module configured to perform re-sorting and/or merging on the PDCP SDUs; or
the transmission unit is a LTE, radio protocols for a plurality of LTEs and supporting joint bearers are located in a same cell, the radio protocols support to transmit, through respective bearers of the UE and at least one slave UE, PDCP SDUs received from an upper layer in a same cell, and for a DRB jointly carried by the plurality of LTEs, a SN of an uplink PDCP SDU for the slave LTE which accesses to a same cell as the UE is assigned by the UE, wherein the UE comprises: a sixth transmission module configured to transmit first indication information to a network side device, the first indication information being used to indicate a master-slave relation between the LTEs; or a sixth reception module configured to receive second indication information transmitted by the network side device, the second indication information being used to indicate the master-slave relation between the UEs.

28. A network side device, wherein
the network side device comprises: a first sorting module configured to perform joint sorting processing on PDCP PDUs transmitted by different transmission units in a same cell through uplink aggregation transmission or uplink joint transmission; or
the network side device is used to provide, in a same cell, downlink aggregation transmission or downlink joint transmission for PDCP SDUs to at least two transmission units, wherein the network side device comprises: in the case of the joint transmission, a second numbering module configured to uniformly number the PDCP SDUs received from an upper layer; and a first transmission module configured to jointly transmit the PDCP SDUs to at least two transmission units for joint transmission through at least two bearers in a same cell; or in the case of the aggregation transmission, a second processing module configured to process, through a PDCP sub-layer and an RLC sub-layer that are arranged for and shared by the at least two transmission units, as well as an MAC sub-layer and a physical sub-layer that are arranged for each of the at least two transmission units, the PDCP SDUs received from the upper layer; or
the network side device supports to provide aggregation transmission or joint transmission through at least two transmission units supporting a same network standard in a same cell, wherein the network side device comprises: a fourth reception module configured to receive first indication information from each of transmission units, the first indication information being used to indicate that the transmission units at least support the aggregation transmission in a same cell or a same network device or the joint transmission in a same cell; or a fourth transmission module configured to transmit second indication information to the transmission units, the second indication information being used to indicate the aggregation transmission or the joint transmission for the transmission units in a same cell; or
the network side device comprises: a third sorting module configured to perform joint sorting on PDCP SDUs, the PDCP SDUs being transmitted by a master LTE and a slave LTE to a same cell through joint transmission or aggregation transmission via respective bearers of the master UE and the slave UE, wherein the master LTE is configured to perform, together with the slave LTE, the joint transmission or aggregation transmission; or
the network side device comprises: a third numbering module configured to uniformly number PDCP SDUs received from an upper layer; and a fifth transmission module configured to jointly transmit the PDCP SDUs to a master UE and a slave UE in a same cell through respective bearers of the master UE and the slave UE, the master LTE is configured to perform, together with the slave LTE, joint transmission or aggregation transmission; or
the network side device comprises: a seventh reception module configured to receive first indication information from a master LTE, the first indication information being used to indicate a master-slave relation between LTEs; or a seventh transmission module configured to transmit second indication information to the master UE, the second indication information being used to indicate a master-slave relation between the UEs.

29. A transmission unit, comprising a processor, a memory, and a computer program stored in the memory and used to be executed by the processor, wherein the processor is configured to execute the computer program to implement the steps of the transmission method according to any one of claims 1 to 4, or implement the steps of the transmission method according to claim 9 or 10, or implement the steps of the transmission method according to claim 11, or implement the steps of the notification method according to claim 12.

30. A UE, comprising a processor, a memory, and a computer program stored in the memory and used to be executed by the processor, wherein the processor is configured to execute the computer program to implement the steps of the transmission method according to any one of claims 14 to 16, or implement the steps of the transmission method according to claim 21 or 22, or implement the steps of the notification method according to claim 23.

31. A network side device, comprising a processor, a memory, and a computer program stored in the memory and used to be executed by the processor, wherein the processor is configured to execute the computer program to implement the steps of the transmission method according to claim 5 or 6, or implement the steps of the transmission method according to claim 7 or 8, or implement the steps of the notification method according to claim 13, or implement the steps of the transmission method according to claim 17 or 18, or implement the steps of the transmission method according to claim 19 or 20, or implement the steps of the notification method according to claim 24.

32. A computer-readable storage medium storing therein a computer program, wherein the computer program is used to be executed by a processor to implement the steps of the transmission method according to any one of claims 1 to 4, or implement the steps of the transmission methods according to claim 5 or 6, or implement the steps of the transmission method according to claim 7 or 8, or implement the steps of the transmission method according to claim 9 or 10, or implement the steps of the transmission method according to claim 11, or implement the steps of the notification method according to claim 12, or implement the steps of the notification method according to claim 13, or implement the steps of the transmission method according to any one of claims 14 to 16, or implement the steps of the transmission method according to claim 17 or 18, or implement the steps of the transmission method according to claim 19 or 20, or implement the steps of the transmission method according to claim 21 or 22, or implement the steps of the notification method according to claim 23, or implement the steps of the notification method according to claim 24.
